# EUROPEAN PATENT SPECIFICATION

(11) **EP 4 365 809 B1**
(45) Date of publication and mention of the grant of the patent: **23.09.2026**
(21) Application number: 22832504.9
(22) Date of filing: 24.03.2022
(51) Int. Cl.: G06Q 50/02, A01B 69/00, G06Q 10/063, G06Q 10/20, A01B 69/04, A01B 59/00

(54) **AGRICULTURAL MACHINE CONTROL SYSTEM AND AGRICULTURE MANAGEMENT SYSTEM**
LANDWIRTSCHAFTLICHES MASCHINENSTEUERUNGSSYSTEM UND LANDWIRTSCHAFTLICHES VERWALTUNGSSYSTEM
SYSTÈME DE COMMANDE DE MACHINE AGRICOLE ET SYSTÈME DE GESTION D'AGRICULTURE

(30) Priority: 29.06.2021 JP 2021107445; 29.06.2021 JP 2021107446
(43) Date of publication of application: 08.05.2024
(73) Proprietor: Kubota Corporation, Osaka-shi, Osaka 530-0011 (JP)
(72) Inventor: KUBOTA, Yuki, Sakai-shi, Osaka 590-0823 (JP); TAMBO, Toru, Sakai-shi, Osaka 590-0823 (JP); OKUBO, Itsuki, Sakai-shi, Osaka 590-0823 (JP); OTA, Kazuki, Sakai-shi, Osaka 590-0823 (JP)
(74) Representative: Global IP Europe Patentanwaltskanzlei
(86) International application number: PCT/JP2022/013990
(87) International publication number: WO 2023/276341

(56) References cited:
- EP-A1- 3 777 499
- EP-B1- 3 057 398
- WO-A1-2020/153369
- WO-A1-2022/167414
- JP-A- 2020 013 374
- JP-A- 2020 103 092
- JP-A- 2020 129 393
- JP-A- 2021 006 802
- JP-A- 2021 076 984
- US-A1- 2011 084 851
- US-A1- 2017 227 969
- US-B1- 10 824 145

## Description

### TECHNICAL FIELD

The present disclosure relates to control systems for agricultural machines and agriculture management systems.

### BACKGROUND ART

Research and development has been directed to the automation of agricultural machines to be used in agricultural fields. For example, work vehicles, such as tractors, combines, and rice transplanters, which automatically travel within fields by utilizing a positioning system, e.g., a GNSS (Global Navigation Satellite System), are coming into practical use. Research and development is also under way for work vehicles which automatically travel not only within fields, but also outside the field (including public roads).

Patent Documents 1 and 2 each disclose an example of system to cause an unmanned work vehicle to automatically travel between two fields separated from each other with a road being sandwiched therebetween.

Patent Document 3 discloses a vehicle control system to automatically move a vehicle to a base at which vehicles are filled with energy usable for travel in a time slot when no schedule of a user of a vehicle is registered.

WO 2022/167414 A1, EP 3 057 398 B1, US 2017/227969 A1, US 2011/084851 A1, and US 10 824 145 B1 each disclose a control system for an agricultural machine, the control system comprising: a controller configured to control self-driving of the agricultural machine; and a storage device configured to store map data on an environment where the agricultural machine moves and a schedule of agricultural work to be performed by the agricultural machine, wherein the agricultural machine includes one or more sensors configured to detect a state of attachment of an implement to be attached to the agricultural machine, deterioration in the implement, deterioration in a part of the agricultural machine, or shortage of supplies.

EP 3 777 499 A1 discloses a technique for optimizing various parameters related to agricultural tractors and implements, such as ballast weights, a tire type, tire pressures, or a lane width.

### CITATION LIST

### PATENT LITERATURE

[Patent Document 1] Japanese Laid-Open Patent Publications No. 2021-073602
[Patent Document 2] Japanese Laid-Open Patent Publications No. 2021-029218
[Patent Document 3] Japanese Laid-Open Patent Publication No. 2021-006802

### SUMMARY OF INVENTION

### TECHNICAL PROBLEM

The present disclosure provides a technique to allow an agricultural machine drivable by self-driving to perform agricultural work more efficiently.

### SOLUTION TO PROBLEM

The object above is achieved by the control system defined by the appended claim 1 and the agriculture management system defined by the appended claim 10. Further advantageous effects can be obtained by the preferred embodiments defined by appended dependent claims.

This specification discloses the following techniques.

### [Item a1]

A control system for an agricultural machine, the control system including:
a controller to control self-driving of the agricultural machine,
wherein in a case where preparation work, including at least one of replacement of an implement to be attached to the agricultural machine, maintenance of the implement, replacement of a part of the agricultural machine, maintenance of the part of the agricultural machine, or replenishment of supplies, is necessary to perform agricultural work, the controller moves the agricultural machine to a preparation site where the preparation work is to be performed, before the agricultural work is performed.

### [Item a2]

The control system of item a1, wherein the controller determines whether the preparation work is necessary or not based on a signal output from one or more sensors to detect a state of attachment of the implement, deterioration in the implement, deterioration in the part of the agricultural machine, or shortage of the supplies.

### [Item a3]

The control system of item a2, wherein the one or more sensors include at least one of an image sensor disposed so as to image the implement, the part of the agricultural machine or the supplies, or a sensor to measure a remaining amount of the supplies.

### [Item a4]

The control system of any one of items a1 to a3, wherein in a case of moving the agricultural machine to the preparation site, the controller transmits a notice to a computer used by a worker performing the preparation work.

### [Item a5]

The control system of any one of items a1 to a4, wherein after the preparation work is completed, the controller moves the agricultural machine to a previously-set repository for the agricultural machine or a field where a next task of agricultural work is scheduled to be performed.

### [Item a6]

The control system of any one of items a1 to a5, wherein the controller determines whether the preparation work is necessary or not for the next task of agricultural work, each time one task of agricultural work performed by the agricultural machine is finished.

### [Item a7]

The control system of any one of items a1 to a6, wherein the controller:
determines whether the preparation work is necessary or not based on a signal output from one or more sensors included in the agricultural machine after agricultural work performed by the agricultural machine for a day is finished,
in a case where the preparation work is not necessary, moves the agricultural machine to a previously-set repository for the agricultural machine, and
in a case where the preparation work is necessary, moves the agricultural machine to the preparation site, and after the preparation work is finished, moves the agricultural machine to the repository.

### [Item a8]

The control system of any one of items a1 to a6, wherein the controller:
transmits a signal requesting performance of the preparation work to a computer at a candidate preparation site for the preparation site,
in a case of receiving a response indicating it is possible to perform the preparation work from the computer, determines the candidate preparation site as the preparation site, and
in a case of not receiving a response indicating it is possible to perform the preparation work from the computer, moves the agricultural machine to a previously-set repository for the agricultural machine without determining the preparation site.

### [Item a9]

The control system of any one of items a1 to a6, wherein the controller:
transmits a signal requesting performance of the preparation work to a first computer at a first candidate preparation site selected from a plurality of candidate preparation sites,
in a case of receiving a response indicating it is possible to perform the preparation work from the first computer, determines the first candidate preparation site as the preparation site,
in a case of not receiving a response indicating it is possible to perform the preparation work from the first computer, transmits a signal requesting performance of the preparation work to a second computer at a second candidate preparation site selected from the plurality of candidate preparation sites, and
in a case of receiving a response indicating it is possible to perform the preparation work from the second computer, determines the second candidate preparation site as the preparation site.

### [Item a10]

The control system of any one of items a1 to a9, wherein when moving the agricultural machine to the preparation site, the controller transmits a notice including information, indicating the preparation site and contents of the preparation work, to a terminal device used by a user of the agricultural machine,

### [Item a11]

An agriculture management system, including:
an agricultural machine including a controller to control self-driving; and
a management device to manage the agricultural machine,
wherein the controller causes the agricultural machine to perform agricultural work based on an instruction from the management device; and in a case where preparation work, including at least one of replacement of an implement to be attached to the agricultural machine, maintenance of the implement, replacement of a part of the agricultural machine, maintenance of the part of the agricultural machine, or replenishment of supplies, is necessary to perform the agricultural work, the controller moves the agricultural machine to a preparation site where the preparation work is to be performed, before the agricultural work is performed.

### [Item a12]

The agriculture management system of item a11, wherein the controller acquires information indicating contents of the agricultural work from the management device, and determines whether the preparation work is necessary or not based on the contents of the agricultural work and a state of the agricultural machine.

### [Item a13]

The agriculture management system of item a12, wherein in a case where any of a state of attachment of the implement, a type of the supplies, or an amount of the supplies is not suitable for the contents of the agricultural work indicated by the information acquired from the management device, the controller determines that the preparation work is necessary; and in a case where any of the state of attachment of the implement, the type of the supplies, or the amount of the supplies is suitable for the contents of the agricultural work, the controller determines that the preparation work is not necessary.

### [Item b1]

A control system for an agricultural machine to perform self-driving, the control system including:
a storage device to store a schedule of agricultural work to be performed by the agricultural machine; and
a controller to control an operation of the agricultural machine according to a schedule,
wherein after a specific task of agricultural work included in the schedule is finished, the controller moves the agricultural machine to a waiting area different from a previously-set repository for the agricultural machine, based on a next task of agricultural work included in the schedule.

### [Item b2]

The control system of item b1, wherein the controller moves the agricultural machine to the waiting area based on the positional relationship between the repository, a field where the specific task of agricultural work was performed, a field where the next task of agricultural work is to be performed, and the waiting area.

### [Item b3]

The control system of item b1 or b2, wherein in a case where a first moving distance, by which the agricultural machine moves from a field where the specific task of agricultural work was performed, via the repository, to a field where the next task of agricultural work is to be performed, is longer than a second moving distance, by which the agricultural machine moves from the field where the specific task of agricultural work was performed, via the waiting area, to the field where the next task of agricultural work is to be performed, the controller moves the agricultural machine to the waiting area.

### [Item b4]

The control system of item b3, wherein in a case where the second moving distance is longer than the first moving distance, the controller moves the agricultural machine to the repository.

### [Item b5]

The control system of any one of items b1 to b4, wherein in a case where a time period from a point of time when the specific task of agricultural work was finished until a point of time when the next task of agricultural work is to be begun is equal to, or longer than, a predetermined time period, the controller moves the agricultural machine to the repository.

### [Item b6]

The control system of any one of items b1 to b5, wherein the storage device stores a plurality of tasks of agricultural work to be performed by the agricultural machine over a plurality of working days, including a final task of agricultural work to be performed on each working day as the specific task of agricultural work and a first task of agricultural work to be performed on each working day as the next task of agricultural work.

### [Item b7]

The control system of any one of items b1 to b6, further including an input device to input the repository managed by a user of the agricultural machine and the waiting area, which is an area used by a plurality of users jointly, to the controller.

### [Item b8]

An agriculture management system, including:
a management device to manage a schedule of agricultural work; and
an agricultural machine including a controller to control self-driving and a communication device to receive the schedule from the management device,
wherein after a specific task of agricultural work included in the schedule is finished, the controller moves the agricultural machine to a waiting area different from a previously-set repository for the agricultural machine, based on a next task of agricultural work included in the schedule.

### [Item b9]

The agriculture control system of item b8, wherein:
the communication device receives, as the schedule, information indicating a field where the specific task of agricultural work was performed and information indicating a field where the next task of agricultural work is to be performed, and
the controller moves the agricultural machine to the waiting area based on the positional relationship between the repository, the field where the specific task of agricultural work was performed, the field where the next task of agricultural work is to be performed, and the waiting area.

### [Item b10]

The agriculture control system of item b8 or b9, wherein in a case where a first moving distance, by which the agricultural machine moves from the field where the specific task of agricultural work was performed, via the repository, to the field where the next task of agricultural work is to be performed, is longer than a second moving distance, by which the agricultural machine moves from the field where the specific task of agricultural work was performed, via the waiting area, to the field where the next task of agricultural work is to be performed, the controller moves the agricultural machine to the waiting area.

### [Item b11]

The agriculture control system of item b10, wherein in a case where the second moving distance is longer than the first moving distance, the controller moves the agricultural machine to the repository.

### [Item b12]

The agriculture control system of any one of items b8 to b11, wherein:
the communication device receives, as the schedule, a schedule including information on a point of time when the next task of agricultural work is to be begun, and
in a case where a time difference between from a point of time when the specific task of agricultural work was finished and the point of time when the next task of agricultural work is to be begun is equal to, or longer than, a predetermined time period, the controller moves the agricultural machine to the repository.

General or specific aspects of the present disclosure may be implemented using a device, a system, a method, an integrated circuit, a computer program, a non-transitory computer-readable storage medium, or any combination thereof. The computer-readable storage medium may be inclusive of a volatile storage medium, or a non-volatile storage medium. The device may include a plurality of devices. In a case where the device includes two or more devices, the two or more devices may be disposed within a single apparatus, or divided over two or more separate apparatuses.

### ADVANTAGEOUS EFFECTS OF INVENTION

According to an embodiment of the present disclosure, it is possible for an agricultural machines drivable by self-driving to perform agricultural work more efficiently.

### BRIEF DESCRIPTION OF DRAWINGS

[FIG. 1] FIG. 1 is a diagram providing an overview of an agriculture management system according to illustrative embodiment 1 of the present disclosure.
[FIG. 2] FIG. 2 is a side view schematically showing an example of work vehicle and an example of an implement that is linked to the work vehicle.
[FIG. **3]** FIG. **3** is a block diagram showing an example configuration of the work vehicle and the implement.
[FIG. **4]** FIG. **4** is a conceptual diagram showing an example of the work vehicle performing positioning based on an RTK-GNSS.
[FIG. **5]** FIG. **5** is a schematic view showing an example of operational terminal and an example of operation switches disposed in a cabin.
[FIG. **6]** FIG. **6** is a rear view showing an example configuration of a rear portion of the work vehicle.
[FIG. **7]** FIG. **7** is a block diagram showing an example of schematic hardware configuration of a management device, a first terminal device and a second terminal device.
[FIG. **8]** FIG. **8** is a diagram schematically showing an example of the work vehicle automatically traveling along a target path in a field.
[FIG. **9]** FIG. **9** is a flowchart showing an example operation of steering control to be performed by a controller during self-driving.
[FIG. **10A]** FIG. **10A** is a diagram showing an example of the work vehicle traveling along a target path **P.**
[FIG. **10B]** FIG. **10B** is a diagram showing an example of the work vehicle at a position which is shifted rightward from the target path **P.**
[FIG. **10C]** FIG. **10C** is a diagram showing an example of the work vehicle at a position which is shifted leftward from the target path **P.**
[FIG. **10D]** FIG. **10D** is a diagram showing an example of the work vehicle oriented in an inclined direction with respect to the target path **P.**
[FIG. **11]** FIG. **11** is a diagram schematically showing an example of state where a plurality of the work vehicles are automatically traveling inside the field and on a road outside the field.
[FIG. **12]** FIG. **12** is a diagram showing an example of setting screen usable to create a schedule.
[FIG. **13]** FIG. **13** is a table showing an example of schedule.
[FIG. **14]** FIG. **14** is a diagram showing an operation of the work vehicle of moving to a preparation site where preparation work is to be performed for a next task of agricultural work.
[FIG. **15]** FIG. **15** is a diagram showing an example in which the work vehicle goes to a field after the preparation work is completed.
[FIG. **16]** FIG. **16** is a diagram showing an example in which the work vehicle performs agricultural work in fields after moving to the preparation site from a repository.
[FIG. **17]** FIG. **17** is a flowchart showing an example operation of the controller.
[FIG. **18]** FIG. **18** is a table showing an example of database representing the correspondence between contents of the preparation work and the preparation sites.
[FIG. **19]** FIG. **19** is a diagram providing an overview of an agriculture management system according to illustrative embodiment 2 of the present disclosure.
[FIG. **20]** FIG. **20** is a block diagram showing an example configuration of the work vehicle and the implement.
[FIG. **21]** FIG. **21** is a block diagram showing an example of schematic hardware configuration of the management device and a terminal device.
[FIG. **22]** FIG. **22** is a diagram showing an operation of the work vehicle of, after performing agricultural work for one day, moving to a waiting area for agricultural work for the next working day.
[FIG. **23]** FIG. **23** is a diagram showing an example operation of the work vehicle of returning to the repository.
[FIG. **24]** FIG. **24** is a diagram showing another example operation of the work vehicle of returning to the repository.
[FIG. **25]** FIG. **25** is a flowchart showing an example of control method to be executed by the controller.

### DESCRIPTION OF EMBODIMENTS

Hereinafter, embodiments of the present disclosure will be described more specifically. Note, however, that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of the claims. In the following description, components elements having identical or similar functions are denoted by identical reference numerals.

The following embodiments are only exemplary, and the techniques according to the present disclosure are not limited to the following embodiments. For example, numerical values, shapes, materials, steps, orders of steps, layout of a display screen, etc., that are indicated in the following embodiments are only exemplary, and admit of various modifications so long as it makes technological sense. Any one implementation may be combined with another so long as it makes technological sense to do so.

### (Embodiment 1)

A control system for an agricultural machine according to illustrative embodiment 1 of the present disclosure includes a controller to control self-driving of the agricultural machine. In a case where preparation work, which includes at least one of replacement of an implement to be attached to the agricultural machine, maintenance of the implement, replacement of a part of the agricultural machine, maintenance of the part of the agricultural machine, or replenishment of supplies, is necessary to perform agricultural work, the controller moves the agricultural machine to a preparation site where the preparation work is to be performed.

According to the above-described configuration, in a case where the preparation work is necessary to perform the agricultural work, the agricultural machine can be automatically moved to the preparation site, where the preparation work is performed. It may be determined whether the preparation work is necessary or not by, for example, a controller or a management device connected to the controller via a network. The above-described configuration allows the agricultural machine to automatically move to the preparation site, with no need for a user to determine that the preparation work is necessary or not and instruct the agricultural machine to move. Therefore, the user needs neither to spend extra time nor to perform extra work, and the preparation for the agricultural work can be performed more efficiently.

In the present disclosure, an "agricultural machine" refers to a machine for agricultural applications. Examples of agricultural machines include tractors, harvesters, rice transplanters, vehicles for crop management, vegetable transplanters, mowers, seeders, spreaders, and mobile robots for agriculture. Not only may a work vehicle (such as a tractor) function as an "agricultural machine" alone by itself, but also a combination of a work vehicle and an implement that is attached to, or towed by, the work vehicle may function as an "agricultural machine". For the ground surface within a field, the agricultural machine performs agricultural work such as tilling, seeding, preventive pest control, manure spreading, planting of crops, or harvesting. Such agricultural work or tasks may be referred to as "groundwork", or simply as "work" or "tasks". Travel of a vehicle-type agricultural machine performed while the agricultural machine also performs agricultural work may be referred to as "tasked travel".

"Self-driving" refers to controlling the movement of an agricultural machine by the action of a controller, rather than through manual operations of a driver. An agricultural machine that performs self-driving may be referred to as a "self-driving agricultural machine" or a "robotic agricultural machine". During self-driving, not only the movement of the agricultural machine, but also the operation of agricultural work may be controlled automatically. In a case where the agricultural machine is a vehicle-type machine, traveling of the agricultural machine via self-driving will be referred to as "self-traveling". The controller may be configured or programmed to control at least one of: steering that is required during movement of the agricultural machine; adjustment of the moving speed; and beginning and ending a move. In a case of controlling a work vehicle having an implement attached thereto, the controller may be configured or programmed to control raising or lowering of the implement, beginning and ending of an operation of the implement, and so on. A move based on self-driving may include not only moving of an agricultural machine that goes along a predetermined path toward a destination, but also moving of an agricultural machine that follows a target of tracking. An agricultural machine that performs self-driving may also have the function of moving partly based on the user's instructions. Moreover, an agricultural machine that performs self-driving may operate not only in a self-driving mode but also in a manual driving mode, where the agricultural machine moves through manual operations of the driver. When performed not manually but through the action of a controller, the steering of an agricultural machine will be referred to as "automatic steering". A portion of, or an entirety of, the controller may reside outside the agricultural machine. Control signals, commands, data, etc., may be communicated between the agricultural machine and a controller residing outside the agricultural machine. An agricultural machine that performs self-driving may move autonomously while sensing the surrounding environment, without any person being involved in the controlling of the movement of the agricultural machine. An agricultural machine that is capable of autonomous movement is able to travel in the field or outside the field (e.g., on roads) in an unmanned manner. During an autonomous movement, operations of detecting and avoiding obstacles may be performed.

"Maintenance" of an implement or a part is an act to allow the implement or the part to exert functions or performance originally owned by the implement or the part. The maintenance may include an act such as, for example, care, repair, adjustment, modification, inspection, or reinforcement.

"Supplies" refers to goods used for agricultural work performed by an agricultural machine. The supplies are also referred to as "agricultural supplies". The supplies may include goods consumed by the agricultural work, for example, agricultural chemicals, fertilizers, seeds, or seedlings.

A "preparation site" is a site at which an agricultural machine stops by for preparation work. The preparation site may be, for example, a repair shop, a store of parts or supplies, a workshop of an individual worker, or a warehouse of supplies. The preparation site may be varied in accordance with the contents of the preparation work. Replacement, repair or care of an implement or a part may be performed at, for example, the repair shop, the store or the workshop of an individual worker. Replenishment of supplies may be performed at, for example, the warehouse of supplies, the store, or the workshop of an individual worker. At the preparation site, a worker or a machine such as a robot performs a predetermined type of preparation work.

The control system may include a storage device to store map data on an environment where an agricultural machine moves. In the following description, the map data may be referred to as an "environment map". The environment map may include, for example, positional information on one or more fields where the agricultural machine performs agricultural work and one or more preparation sites at which the agricultural machine stops by. The environment map may include positional information on a repository where the agricultural machine is kept. Based on the environment map and the positional information on the agricultural machine, the controller can generate a path along which the agricultural machine is to move. The positional information on the agricultural machine may be generated based on, for example, data that is output from a GNSS receiver mounted on the agricultural machine. In the following description, the path along which the agricultural machine is to move may be referred to as a "target path". A management device connected to the controller via a network may generate a target path. In this case, the management device transmits information indicating the generated target path to the controller. The controller controls a drive device of the agricultural machine so that the agricultural machine moves along the target path. In this manner, the controller can move the agricultural machine toward a desired destination such as the field, the preparation site, or the repository.

The controller may move the agricultural machine to any of different preparation sites in accordance with contents of the preparation work. The storage device may store data representing the correspondence between the contents of the preparation work and preparation sites. The controller can determine the preparation site in accordance with the contents of the preparation work based on the data and generate a path toward the preparation site. The controller can move the agricultural machine along the generated path to allow the agricultural machine to arrive at the preparation site.

A schedule of agricultural work to be performed by the agricultural machine may be recorded in the storage device of the control system previously. The controller may control the movement of the agricultural machine according to the schedule. For example, for each of tasks of agricultural work, the schedule may include information indicating the time/date and the field when and where the agricultural work is to be performed. In a case of determining that preparation work is necessary to perform one of the tasks of agricultural work included in the schedule, the controller moves the agricultural machine to the preparation site where the preparation work is to be performed, before the agricultural work is performed.

Whether the preparation work is to be performed or not may be determined from various points of view. For example, the controller may determine whether the preparation work is necessary or not based on a signal output from one or more sensors detecting a state of attachment of the implement, deterioration in the implement, deterioration in a part of the agricultural machine, or shortage of the supplies. The one or more sensors may include, for example, at least one of an image sensor disposed so as to image the implement, parts of the agricultural machine and the supplies, or a sensor to measure a remaining amount of the supplies. The sensor to measure the remaining amount of the supplies may be, for example, a weight sensor. In a case where the image sensor is used, the controller may detect the deterioration or malfunction of the implement or a part or the shortage of the supplies by executing image processing based on a signal output from the image sensor. In the following description, a device including one or more sensors to detect the state of attachment of the implement, the deterioration in the implement, the deterioration in the agricultural machine, or the shortage of the supplies may be referred to as a "state detection device".

The controller may determine whether the preparation work is necessary or not based on the time period of use of the implement or the part. For example, the time period from the beginning of use of the implement or the part up to the current moment is recorded, and the controller may determine that the preparation work for the replacement is necessary in a case where the time period exceeds a threshold value.

The controller may determine whether the preparation work is necessary or not based on data representing the amount of consumption of the supplies for each task of agricultural work performed by the agricultural machine. For example, in a case where the amount of a certain type of supplies to be consumed by the agricultural work performed from the time of the immediately previous supplement up to the current moment exceeds a threshold value, the controller may determine that the preparation work for replenishment of the certain type of supplies is necessary. The amount of consumption of the supplies for each task of agricultural work may be recorded together with, for example, the schedule described above.

In a case of moving the agricultural machine to the preparation site, the controller may transmit a notice to a computer used by a worker performing the preparation work at the preparation site. The computer may be, for example, a personal computer (PC), a laptop computer, a tablet computer or a smartphone. The notice may include, for example, information indicating the contents of the preparation work and information indicating the point of time when the agricultural machine is scheduled to arrive at the preparation site. The worker can learn from the notice received by the computer that the agricultural machine is to come to the preparation site. The worker can prepare a part, an implement or supplies necessary to perform the preparation work before the agricultural machine arrives.

After the preparation work is completed, the controller may move the agricultural machine to a previously-set repository for the agricultural machine or a field where the next task of agricultural work is scheduled to be performed. The repository may be, for example, a barn at a house of an owner of the agricultural machine or a garage at an office of an agricultural business executive. The field where the next task of agricultural work is scheduled to be performed may be identified by, for example, referring to a schedule stored in the storage device. The positions of the repository and the field may be recorded in the storage device previously.

The controller may determine whether the preparation work is necessary or not for the next task of agricultural work each time one task of agricultural work by the agricultural machine is finished. As described above, whether the preparation work is necessary or not may be determined based on an output of a sensor or a measurement device. The controller may determine whether the preparation work is necessary or not each time, for example, one task of agricultural work included in the schedule stored in the storage device is finished.

The controller may determine whether the preparation work is necessary or not based on a signal output from one or more sensors included in the agricultural machine after the agricultural work by the agricultural machine scheduled for one day is finished. In a case where no preparation work is necessary, the controller moves the agricultural machine to a previously-set repository for the agricultural machine. By contrast, in a case where the preparation work is necessary, the controller moves the agricultural machine to the preparation site where the preparation work is to be performed, and after the preparation work is completed, the controller moves the agricultural machine to the repository. As a result of such an operation, in a case where, after the final task of agricultural work scheduled for the day is finished, the preparation work is necessary for the next task of agricultural work scheduled for the next day or thereafter, the controller can cause the agricultural machine to stop by at the preparation site where the preparation work is to be performed; and after the preparation work is finished, the controller can return the agricultural machine to the repository.

The controller may perform operations (a1) to (a3) below in a case where the preparation work is necessary.
(a1) Transmits a signal requesting performance of the preparation work to a computer at a candidate preparation site.
(a2) In a case of receiving a response indicating that it is possible to perform the preparation work from the computer, determines the candidate preparation site as the preparation site.
(a3) In a case of not receiving a response indicating that it is possible to perform the preparation work from the computer, moves the agricultural machine to a previously-set repository without determining the preparation site.

As a result of the above-described operations, only in a case where it is possible to perform the preparation work at a candidate preparation site, the controller can move the agricultural machine to the candidate preparation site. The computer at the candidate preparation site may be configured or programmed to transmit a response indicating that it is possible to perform the preparation work to the controller based on, for example, a manipulation of a worker at the candidate preparation site.

The control system may include a storage device to store a database including positional information on each of a plurality of candidate preparation sites and information indicating one or more tasks of preparation work that are to be performed at each of the plurality of candidate preparation sites. The controller may refer to the database to determine, as the preparation site, one candidate preparation site where the preparation work necessary to perform the agricultural work can be performed, from among the plurality of candidate preparation sites.

In a case where the preparation work is necessary, the controller may perform the following operations of (b1) to (b4).
(b1) Transmits a signal requesting performance of the preparation work to a first computer at a first preparation site selected from a plurality of candidate preparation sites.
(b2) In a case of receiving a response indicating that it is possible to perform the preparation work from the first computer, determines the first candidate preparation site as the preparation site.
(a3) In a case of not receiving a response indicating that it is possible to perform the preparation work from the first computer, transmits a signal requesting performance of the preparation work to a second computer at a second preparation site selected from the plurality of candidate preparation sites.
(b4) In a case of receiving a response indicating that it is possible to perform the preparation work from the second computer, determines the second candidate preparation site as the preparation site.

As a result of the above-described operations, a candidate preparation site where it is possible to perform the preparation work can be identified from the plurality of candidate preparation sites. Therefore, even in a case where, for example, it is impossible to perform the preparation work at one candidate preparation site for a reason of shortage of parts, supplies or personnel, a candidate preparation site where it is possible to perform the preparation work, among the other candidate preparation sites, can be determined as the preparation site.

When moving the agricultural machine to the preparation site, the controller may transmit, a notice including information, indicating the preparation site and the contents of the preparation work, to a terminal device used by the user of the agricultural machine. Receipt of such a notice allows the user to learn that the preparation work is to be performed at the preparation site. The user may be, for example, an owner of the agricultural machine or a worker usually using the agricultural machine. The terminal device may be any computer such as, for example, a smartphone or a tablet computer. After the preparation work is completed, the controller may move the agricultural machine to a previously-set repository for the agricultural machine. In this case, the notice may include information indicating the point of time when the agricultural machine is scheduled to arrive at the repository. This allows the user to learn the point of time when the agricultural machine is to return to the repository.

The controller may determine whether the preparation work is necessary or not while the agricultural machine is performing agricultural work in a field. For example, in a case of detecting a malfunction or a fault of the implement or a part based on a signal output from one or more sensors during the agricultural work, the controller may determine that the preparation work is necessary. In this case, the controller may cause the agricultural machine to suspend the agricultural work and move the agricultural machine to the repository. Alternatively, the controller may move the agricultural machine to the repository after the agricultural work in the field is finished or after all the tasks of agricultural work for the day are finished. In this case, at the time when determining that the preparation work is necessary, the controller may transmit a notice to the terminal device to notify the user that, after the agricultural work at the field is finished or after all the tasks of agricultural work for the day are finished, the agricultural machine is to stop by at the preparation site and then return to the repository.

In a case where the previously-set schedule of the agricultural work needs to be changed because of the preparation work performed at the preparation site, the management device managing the schedule may correct the schedule in consideration of the time period required for the preparation work. In this case, the controller may transmit a notice indicating that the schedule has been changed to a first termina device. The notice may include information indicating the post-correction schedule of the agricultural work. This allow the user, checking the notice, to grasp that the schedule has been changed.

An agriculture management system according to another embodiment of the present disclosure includes an agricultural machine including a controller to control self-driving and a management device to manage the agricultural machine. The controller causes the agricultural machine to perform agricultural work based on an instruction from the management device. In a case where preparation work, including at least one of replacement of an implement to be attached to the agricultural machine, maintenance of the implement, replacement of a part of the agricultural machine, maintenance of the part of the agricultural machine, or replenishment of supplies, is necessary to perform the agricultural work, the controller moves the agricultural machine to a preparation site where the preparation work is to be performed.

A "management device" is a computer to manage the agricultural machine. The management device may include, for example, one or more processors and one or more memories. The processor can consecutively execute computer programs stored in the memory to realize a desired process. The management device may be, for example, a computer such as a cloud server disposed in a place far from the agricultural machine. The management device and the agricultural machine may exchange signals via a network. Alternatively, one of a plurality of electronic control units (ECU) mounted on the agricultural machine may act as the management device. The management device and the controller may be realized as one device. The management device may be a computer installed at a house or an office of the user of the agricultural machine.

The management device may instruct to the controller of the agricultural machine to perform agricultural work based on, for example, a schedule of the agricultural work stored in the storage device included in the agriculture management system. The controller can follow the instruction from the management device to move the agricultural machine to a field and cause the agricultural machine to perform the agricultural work at the field.

The controller may acquire information indicating contents of the agricultural work from the management device and determine whether the preparation work is necessary or not based the contents of the agricultural work and a state of the agricultural machine. The state of the agricultural machine may be, for example, a state of attachment of the implement, a state of the parts of the agricultural machine, or the degree of shortage of the supplies.

In a case where any one of the state of attachment of the implement to the agricultural machine, the types of the supplies, or an amount of the supplies is not suitable for the contents of the agricultural work acquired from the management device, the controller may determine that the preparation work is necessary. By contrast, in a case where any of the state of attachment of the implement, the types of the supplies, or the amount of the supplies is suitable for the contents of the agricultural machine acquired from the management device, the controller may determine that the preparation work is not necessary. For example, in a case where the implement to be used for the next task of agricultural work is not attached to the agricultural machine, or in a case where the supplies to be used for the next task of agricultural work are not mounted on the agricultural machine in a sufficient amount, it is determined that the preparation work is necessary. In this case, the controller moves the agricultural machine to the preparation site where the preparation work is to be performed. This allows the preparation work suitable for the agricultural work to be performed properly.

A method for controlling self-driving of an agricultural machine according to still another embodiment of the present disclosure includes: determining whether preparation work, including at least one of replacement of an implement to be attached to the agricultural machine, maintenance of the implement, replacement of a part of the agricultural machine, maintenance of the part of the agricultural machine, or replenishment of supplies, is necessary or not for agricultural work; and in a case where the preparation work is necessary, moving the agricultural machine to a preparation site where the preparation work is to be performed, before the agricultural work is performed.

A computer program to control self-driving of an agricultural machine according to still another embodiment of the present disclosure is executable by a computer to: determine whether preparation work, including at least one of replacement of an implement to be attached to the agricultural machine, maintenance of the implement, replacement of a part of the agricultural machine, maintenance of the part of the agricultural machine, or replenishment of supplies, is necessary or not for agricultural work; and in a case where the preparation work is necessary, move the agricultural machine to a preparation site where the preparation work is to be performed, before the agricultural work is performed.

Hereinafter, embodiments in which a technique or techniques according to the present disclosure is applied to a work vehicle, such as a tractor, which is an example of agricultural machine, will be described. The technique(s) according to the present disclosure is also applicable to other types of agricultural machines in addition to the work vehicle such as a tractor.

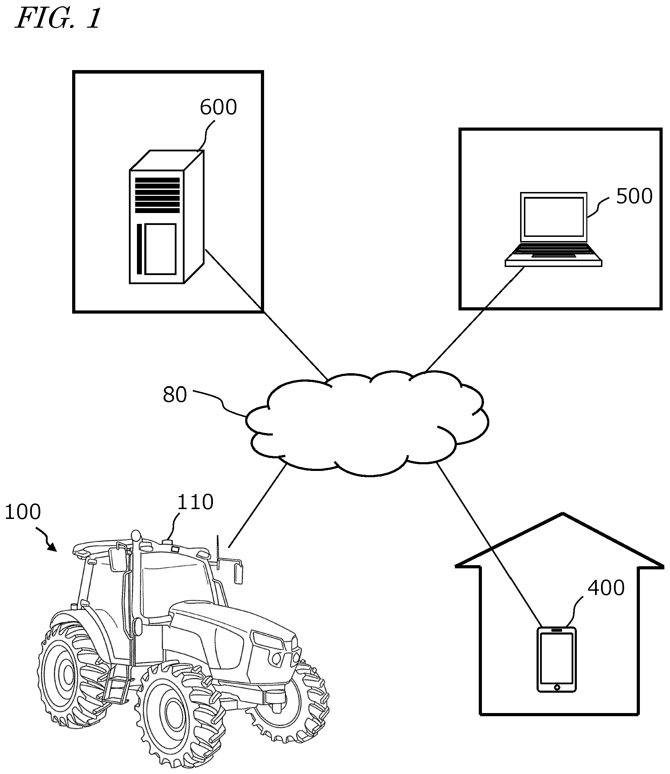

FIG. **1** is a diagram providing an overview of an agriculture management system according to the present embodiment. The agriculture management system shown in FIG. 1 includes a work vehicle **100,** a first terminal device **400,** a second terminal device **500,** and a management device **600.** The first terminal device **400** is a computer used by a user performing remote monitoring of the work vehicle **100.** The second terminal device **500** is a computer disposed at a preparation site at which the work vehicle **100** stops by for preparation work, before agricultural work. The management device **600** may be a computer managed by a business operator managing the agriculture management system. The work vehicle **100,** the first terminal device **400,** the second terminal device **500** and the management device **600** can communicate with each other via a network **80.** FIG. **1** shows one work vehicle **100** as an example, but the agriculture management system may include a plurality of work vehicles or any other agricultural machine. In a case where a plurality of preparation sites are provided, the second terminal device 500 may be installed in each of the plurality of preparation sites.

In the present embodiment, the work vehicle **100** is a tractor. The tractor can have an implement attached to its rear and/or its front. While performing agricultural work according to the particular type of implement, the tractor is able to automatically travel inside a field. The tractor may travel inside the field or outside the field with no implement being attached thereto.

The work vehicle **100** has a self-driving function. In other words, the work vehicle 100 can travel by the action of a controller, rather than manually. The controller according to the present embodiment is provided inside the work vehicle **100,** and is able to control both the speed and steering of the work vehicle **100.** The work vehicle **100** can perform self-traveling outside the field including public roads as well as inside the field.

The work vehicle **100** includes a positioning device **110** including a GNSS receiver. Based on the position of the work vehicle **100** as identified by the positioning device **110** and a target path stored in a storage device previously, the controller causes the work vehicle **100** to automatically travel. In addition to controlling the travel of the work vehicle **100,** the controller also controls the operation of the implement. As a result, while automatically traveling, the work vehicle **100** is able to perform a task (work) by using the implement.

The management device **600** is a computer to manage the move and the work performed by the work vehicle **100.** The management device **600** may be, for example, a server computer that performs centralized management on information regarding the field on the cloud and supports agriculture by use of the data on the cloud. The management device **600,** for example, stores a schedule of agricultural work to be performed by the work vehicle **100** and instructs the work vehicle **100** to travel and perform the agricultural work according to the schedule.

The first terminal device **400** is a computer that is used by a user who is at a remote place from the work vehicle **100.** The first terminal device **400** shown in FIG. **1** is a smartphone, but the first terminal device **400** is not limited to a smartphone. The first terminal device **400** may be a mobile terminal such as, for example, a smartphone, a tablet computer or a laptop computer, or a stationary computer such as a desktop PC. The first terminal device **400** may be used to monitor the work vehicle **100.** For example, the first terminal device **400** can display, on a display screen thereof, a video captured by one or more cameras included in the work vehicle **100.** The user can watch the video to check the state of the surroundings of the work vehicle **100.** The first terminal device **400** further receives a notice in a case where the work vehicle **100** goes to a specific preparation site for preparation work. The user can check the notice to learn that the preparation work is to be performed at the preparation site. The first terminal device **400** may be configured to receive a completion notice transmitted when the preparation work is completed. The user can check the completion notice to learn that the preparation work has been completed. The first terminal device **400** also displays, on a display screen thereof, a setting screen allowing the user to input information necessary to create a schedule of agricultural work that is to be performed by the work vehicle **100.** When the user inputs necessary information to the setting screen and performs a manipulation to transmit the information, the first terminal device **400** transmits the input information to the management device **600.** The management device **600** creates and records a schedule of the agricultural work based on the information. The management device **600** transmits the schedule of the agricultural work to the work vehicle **100.** The work vehicle **100** moves between a plurality of fields according to the received schedule, to perform agricultural work at each of the fields. The first terminal device **400** may include an input device allowing positional information on the repository for the work vehicle **100** and one or more preparation sites to be input thereto.

The second terminal device **500** is a computer used by a worker performing preparation work at a preparation site. The second terminal device **500** may be any computer such as, for example, a laptop computer, a desktop PC, a server computer, a tablet computer or a smartphone. In a case where the work vehicle **100** goes to the preparation site for preparation work, the second terminal device **500** receives a notice. The worker at the preparation site checks the notice to learn that the work vehicle **100** is to come. The worker can prepare for the preparation work based on the contents of the notice. When the preparation work is completed, the second terminal device **500** may also be used by the worker to perform a manipulation for the completion. When the worker performs the manipulation for the completion, the second terminal device **500** transmits a signal indicating that the preparation work has been completed to the work vehicle **100.** This signal may be transmitted via the management device **600.** Upon receipt of the signal, the work vehicle **100** moves to the repository for the work vehicle **100** or the field where the next task of agricultural work is scheduled. At this point, the work vehicle **100** or the management device **600** transmit a completion notice indicating that the preparation work has been completed to the first terminal device **400.**

Hereinafter, the configuration and operation of a system according to the present embodiment will be described in more detail.

### [1. Configuration]

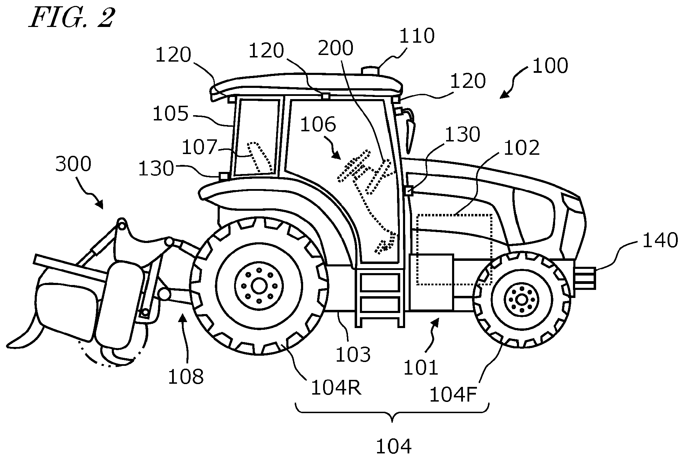

FIG. **2** is a side view schematically showing an example of the work vehicle **100** and an example of implement **300** linked to the work vehicle **100.** The work vehicle **100** according to the present embodiment functions in both a manual driving mode and a self-driving mode. In the self-driving mode, the work vehicle **100** is able to perform unmanned travel. The work vehicle **100** can perform self-driving both inside the field and outside the field (including roads).

As shown in FIG. **2****,** the work vehicle **100** includes a vehicle body **101,** a prime mover (engine) **102,** and a transmission **103.** On the vehicle body **101,** tires (wheels) **104** and a cabin **105** are provided. The wheels **104** include a pair of front wheels **104F** and a pair of rear wheels **104R.** Inside the cabin **105,** a driver's seat **107,** a steering device **106,** an operational terminal **200,** and switches for manipulation are provided. In a case where the work vehicle **100** performs tasked travel inside the field, the front wheels **104F** and/or the rear wheels **104R** may be crawlers, rather than tires.

The work vehicle **100** shown in FIG. **2** further includes a plurality of the cameras **120.** The cameras **120** may be provided at the front/rear/right/left of the work vehicle **100,** for example. The cameras **120** capture images of the surrounding environment of the work vehicle **100,** and generate image data. The images acquired by the cameras **120** may be transmitted to the terminal device **400,** which is responsible for remote monitoring. The images may be used to monitor the work vehicle **100** during unmanned driving. The cameras **120** may also be used to generate images to allow the work vehicle **100,** traveling on the road, to recognize traffic lines, road signs, traffic markings or obstacles in the surroundings.

The work vehicle **100** further includes the positioning device **110.** The positioning device **110** includes a GNSS receiver. The GNSS receiver includes an antenna to receive a signal (s) from a GNSS satellite(s) and a processor to calculate the position of the work vehicle **100** based on the signal(s) received by the antenna. The positioning device **110** receives satellite signals transmitted from the plurality of GNSS satellites, and performs positioning based on the satellite signals. GNSS is the general term for satellite positioning systems such as GPS (Global Positioning System), QZSS (Quasi-Zenith Satellite System; e.g., MICHIBIKI), GLONASS, Galileo, and BeiDou. Although the positioning device **110** in the present embodiment is disposed above the cabin **105,** it may be disposed at any other position.

The positioning device **110** may include an inertial measurement unit (IMU). Signals from the IMU can be utilized to complement position data. The IMU can measure a tilt or a small motion of the work vehicle **100.** The data acquired by the IMU can be used to complement the position data based on the satellite signals, so as to improve the performance of positioning.

The work vehicle **100** shown in FIG. **2** further includes a LiDAR sensor **140.** The LiDAR sensor **140** in this example is disposed on a bottom portion of a front surface of the vehicle body **101.** The LiDAR sensor **140** may be disposed at any other position. During movement of the work vehicle **100,** the LiDAR sensor **140** repeatedly outputs sensing data representing the distance and the direction between measurement points on objects present in the surrounding environment thereof, or a two-dimensional or three-dimensional coordinate values of the measurement points. The sensing data output from the LiDAR sensor **140** is processed by the controller of the work vehicle **100.** The controller can utilize an algorithm such as, for example, SLAM (Simultaneous Localization and Mapping) to execute a process of, for example, generating an environment map based on the sensing data. The environment map may be generated by another computer such as, for example, the management device **600** outside the work vehicle **100.** The sensing data output from the LiDAR senser **140** may also be used to detect obstacles.

The positioning device **110** may utilize the data acquired by the cameras **120** or the LIDAR senser **140** for positioning. When objects serving as characteristic points exist in the environment that is traveled by the work vehicle **100,** the position of the work vehicle **100** can be estimated with a high accuracy based on data that is acquired by the cameras **120** or the LiDAR sensor **140** and an environment map that is previously recorded in the storage device. By correcting or complementing position data based on the satellite signals using the data acquired by the cameras **120** or the LiDAR sensor **140,** it becomes possible to identify the position of the work vehicle **100** with a higher accuracy.

The work vehicle **100** further includes a plurality of obstacle sensors **130.** In the example shown in FIG. **2****,** the obstacle sensors **130** are provided at the front and the rear of the cabin **105.** The obstacle sensors **130** may be disposed at other positions. For example, one or more obstacle sensors **130** may be disposed at any position at the sides, the front or the rear of the vehicle body **101.** The obstacle sensors **130** may be used to detect obstacles in the surroundings of the work vehicle **100** during self-traveling to cause the work vehicle **100** to stop or detour around the obstacles.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the work vehicle **100.** The steering angle of the front wheels **104F** can be changed by manipulating the steering wheel. The power steering device includes a hydraulic device or an electric motor to supply an assisting force to change the steering angle of the front wheels **104F.** When automatic steering is performed, under the control of a controller disposed in the work vehicle **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point link" or a "three-point hitch"), a PTO (Power Take Off) shaft, a universal joint, and a communication cable. The linkage device **108** allows the implement **300** to be attached to, or detached from, the work vehicle **100.** The linkage device **108** is able to raise or lower the three-point link with a hydraulic device, for example, thus changing the position and/or attitude of the implement **300.** Moreover, motive power can be sent from the work vehicle **100** to the implement **300** via the universal joint. While towing the implement **300,** the work vehicle **100** allows the implement **300** to perform a predetermined task. The linkage device may be provided frontward of the vehicle body **101.** In that case, the implement may be connected frontward of the work vehicle **100.**

Although the implement **300** shown in FIG. **2** is a rotary tiller, the implement **300** is not limited to a rotary tiller. For example, any arbitrary implement such as a seeder, a spreader, a transplanter, a mower, a rake implement, a baler, a harvester, a sprayer, or a harrow, may be connected to the work vehicle **100** for use.

The work vehicle **100** shown in FIG. **2** can be driven by human driving; alternatively, it may only support unmanned driving. In that case, component elements which are only required for human driving, e.g., the cabin **105,** the steering device **106,** and the driver's seat **107** do not need to be provided in the work vehicle **100.** An unmanned work vehicle **100** may travel via autonomous driving, or by remote manipulation by a user.

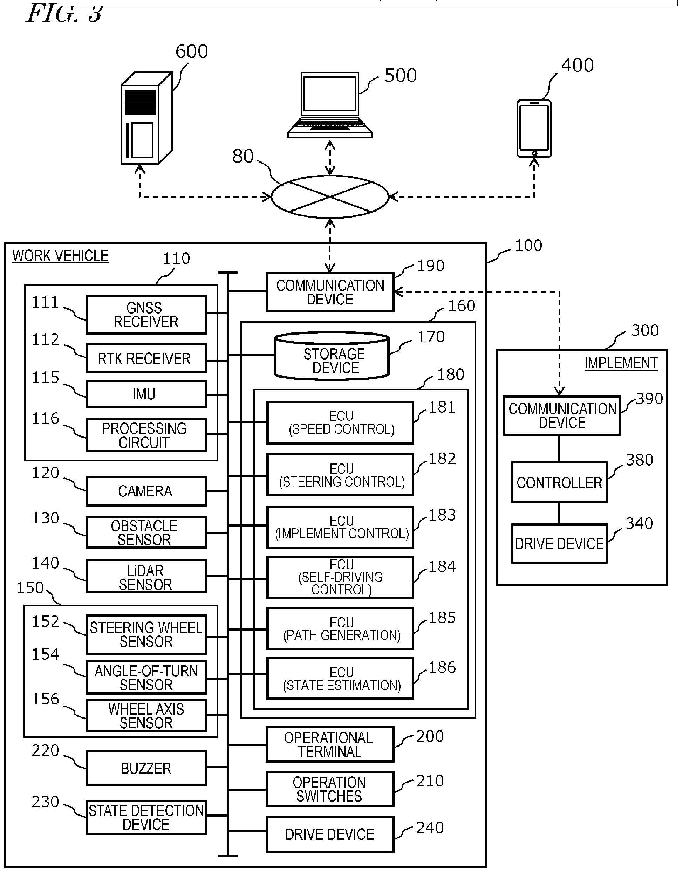

FIG. **3** is a block diagram showing an example configuration of the work vehicle **100** and the implement **300.** The work vehicle **100** and the implement **300** can communicate with each other via a communication cable that is included in the linkage device **108.** The work vehicle **100** is able to communicate with the first terminal device **400,** the second terminal device **500** and the management device **600** via the network **80.**

In addition to the positioning device **110,** the cameras **120,** the obstacle sensors **130,** the LiDAR sensor **140** and the operational terminal **200,** the work vehicle **100** in the example of FIG. **3** includes sensors **150** to detect the operating status of the work vehicle **100,** a control system **160,** a communication device **190,** operation switches **210,** a buzzer **220,** a state detection device **230** and a drive device **240.** These component elements are communicably connected with each other via a bus. The positioning device **110** includes a GNSS receiver **111,** an RTK receiver **112,** an inertial measurement unit (IMU) **115,** and a processing circuit **116.** The sensors **150** include a steering wheel sensor **152,** an angle-of-turn sensor **154,** and a wheel axis sensor **156.** The control system **160** includes a storage device **170** and a controller **180.** The controller **180** includes a plurality of electronic control units (ECU) **181** to **186.** The implement **300** includes a drive device **340,** a controller **380,** and a communication device **390.** Note that FIG. **3** shows component elements which are relatively closely related to the operations of self-driving by the work vehicle **100,** while other components are omitted from illustration.

The GNSS receiver **111** in the positioning device **110** receives satellite signals transmitted from a plurality of GNSS satellites and generates GNSS data based on the satellite signals. The GNSS data may be generated in a predetermined format such as, for example, the NMEA-0183 format. The GNSS data may include, for example, the identification number, the angle of elevation, the angle of direction, and a value representing the reception strength of each of satellites from which the satellite signals are received.

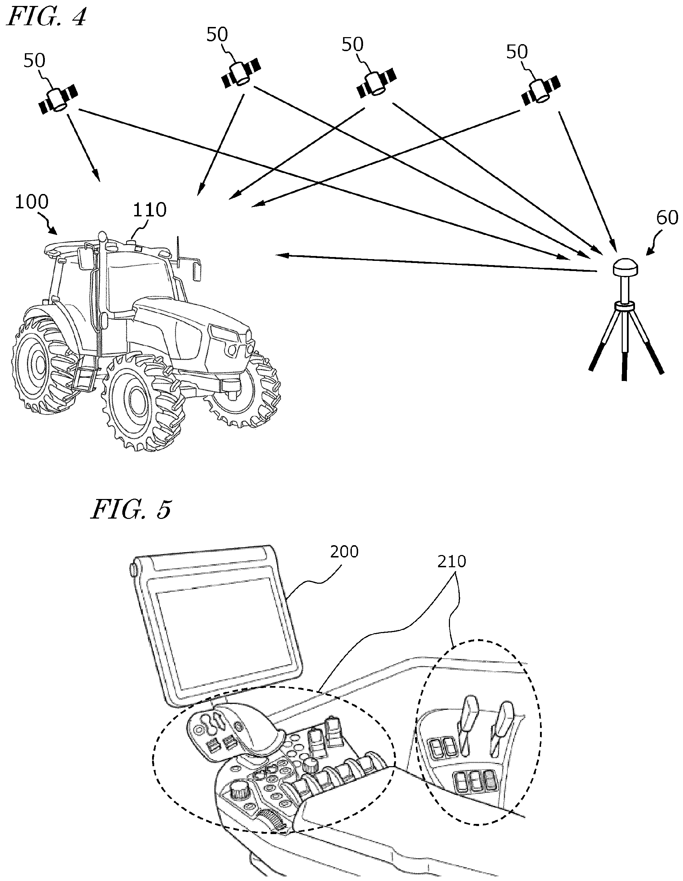

The positioning device **110** shown in FIG. **3** performs positioning of the work vehicle **100** by utilizing an RTK (Real Time Kinematic)-GNSS. FIG. **4** is a conceptual diagram showing an example of the work vehicle **100** performing positioning based on the RTK-GNSS. In the positioning based on the RTK-GNSS, not only satellite signals transmitted from a plurality of GNSS satellites **50,** but also a correction signal that is transmitted from a reference station **60** is used. The reference station **60** may be disposed near the field that is traveled by the work vehicle **100** (e.g., at a position within 1 km of the work vehicle **100).** The reference station **60** generates a correction signal of, for example, an RTCM format based on the satellite signals received from the plurality of GNSS satellites **50,** and transmits the correction signal to the positioning device **110.** The RTK receiver **112,** which includes an antenna and a modem, receives the correction signal transmitted from the reference station **60.** Based on the correction signal, the processing circuit **116** of positioning device **110** corrects the results of the positioning performed by use of the GNSS receiver **111.** Use of the RTK-GNSS enables positioning with an accuracy on the order of several centimeters of errors, for example. Positional information (including latitude, longitude, and altitude information) is acquired through the highly accurate positioning by the RTK-GNSS. The positioning device **110** calculates the position of the work vehicle **100** as frequently as, for example, one to ten times per second.

Note that the positioning method is not limited to being performed by use of an RTK-GNSS; any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System). In a case where positional information with the necessary accuracy can be obtained without the use of the correction signal transmitted from the reference station **60,** positional information may be generated without using the correction signal. In that case, the positioning device **110** does not need to include the RTK receiver **112.**

The positioning device **110** in the present embodiment further includes the IMU **115.** The IMU **115** may include a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the work vehicle **100.** Based not only on the satellite signals and the correction signal but also on a signal that is output from the IMU **115,** the processing circuit **116** can estimate the position and orientation of the work vehicle **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** Utilizing this signal that is output highly frequently, the processing circuit **116** allows the position and orientation of the work vehicle **100** to be measured more frequently (e.g., about 10 Hz or above). Instead of the IMU **115,** a 3-axis accelerometer and a 3-axis gyroscope may be separately provided. The IMU **115** may be provided as a separate device from the positioning device **110.**

In the example of FIG. **3****,** the processing circuit **116** calculates the position of the work vehicle **100** based on the signals which are output from the GNSS receiver **111,** the RTK receiver **112** and the IMU **115.** The processing circuit **116** may further estimate or correct the position of the work vehicle **100** based on the data acquired by the cameras **120** or the LiDAR sensor **140.** Use of the data acquired by the cameras **120** or the LiDAR sensor **140** allows the accuracy of positioning to be further improved.

The calculation of the position is not limited to being performed by the positioning device **110,** and may be performed by any other device. For example, the controller **180** or an external computer may acquire output data from each of the receivers and each of the sensors as is required for positioning, and estimate the position of the work vehicle **100** based on such data.

The cameras **120** are imagers that image the surrounding environment of the work vehicle **100.** Each of the cameras **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the work vehicle **100,** the cameras **120** image the surrounding environment of the work vehicle **100,** and generate image data (e.g., motion picture data). The cameras **120** are able to capture motion pictures at a frame rate of 3 frames/second (fps: frames per second) or greater, for example. The images generated by the cameras **120** may be used when a remote supervisor checks the surrounding environment of the work vehicle **100** with the first terminal device **400,** for example. The images generated by the cameras **120** may also be used for the purpose of positioning and/or detection of obstacles. As shown in FIG. **2****,** the plurality of cameras **120** may be provided at different positions on the work vehicle **100,** or a single camera **120** may be provided. A visible camera(s) to generate visible light images and an infrared camera(s) to generate infrared images may be separately provided. Both of a visible camera(s) and an infrared camera(s) may be provided as cameras for generating images for monitoring purposes. The infrared camera(s) may also be used for detection of obstacles at nighttime.

The obstacle sensors **130** detect objects around the work vehicle **100.** Each of the obstacle sensors **130** may include a laser scanner or an ultrasonic sonar, for example. When an object exists at a position within a predetermined distance from the obstacle sensor **130,** the obstacle sensor **130** outputs a signal indicating the presence of the obstacle. The plurality of obstacle sensors **130** may be provided at different positions on the work vehicle **100.** For example, a plurality of laser scanners and a plurality of ultrasonic sonars may be disposed at different positions on the work vehicle **100.** Providing such a great number of obstacle sensors **130** can reduce blind spots in monitoring obstacles around the work vehicle **100.**

The steering wheel sensor **152** measures the angle of rotation of the steering wheel of the work vehicle **100.** The angle-of-turn sensor **154** measures the angle of turn of the front wheels **104F,** which are the wheels responsible for steering. Measurement values by the steering wheel sensor **152** and the angle-of-turn sensor **154** are used for steering control by the controller **180.**

The wheel axis sensor **156** measures the rotational speed, i.e., the number of revolutions per unit time, of a wheel axis that is connected to a tire **104.** The wheel axis sensor **156** may be a sensor including a magnetoresistive element (MR), a Hall generator, or an electromagnetic pickup, for example. The wheel axis sensor **156** outputs a numerical value indicating the number of revolutions per minute (unit: rpm) of the wheel axis, for example. The wheel axis sensor **156** is used to measure the speed of the work vehicle **100.**

The drive device **240** includes various types of devices required to cause the work vehicle **100** to travel and to drive the implement **300.** For example, the prime mover **102,** the transmission **103,** the steering device **106,** the linkage device **108** and the like described above. The prime mover **102** may include an internal combustion engine such as, for example, a diesel engine. The drive device **240** may include an electric motor for traction instead of, or in addition to, the internal combustion engine.

The buzzer **220** is an audio output device to present an alarm sound to alter the user of an abnormality. For example, the buzzer **220** may present an alarm sound when an obstacle is detected during self-driving. The buzzer **220** is controlled by the controller **180.**

The state detection device **230** is a device including one or more sensors to detect a state of attachment of the implement **300,** deterioration in the implement **300,** deterioration in a part of the work vehicle **100,** or shortage of supplies. The one or more sensors may include, for example, at least one of an image sensor disposed so as to image the implement **300,** parts of the work vehicle **100** and the supplies to be consumed by the agricultural work, or a sensor to measure a remaining amount of the supplies. A specific example of the state detection device **230** will be described below.

The storage device **170** includes one or more storage mediums such as a flash memory or a magnetic disc. The storage device **170** stores various data that is generated by the positioning device **110,** the cameras **120,** the obstacle sensors **130,** the sensors **150,** the state detection device **230** and the controller **180.** The data that is stored by the storage device **170** includes the environment map, which is data on the environment where the work vehicle **100** travels and data on a target path for self-driving. The environment map includes information on a plurality of fields where the work vehicle **100** performs agricultural work and roads in the surroundings of the fields. The environment map and the target path may be generated by the controller **180** itself or generated by a processor in the management device **600.** In the present embodiment, an example in which the target path is generated by the controller **180** will be described. The storage device **170** also stores a schedule of agricultural work (hereinafter, referred to also as a "work schedule") received by the communication device **190** from the management device **600.** The work schedule includes information indicating a plurality of tasks of agricultural work to be performed by the work vehicle **100** over a plurality of working days. The storage device **170** also stores a computer program(s) to cause each of the ECUs in the controller **180** to perform various operations (to be described later). Such a computer program(s) may be provided to the work vehicle **100** via a storage medium (e.g., a semiconductor memory, an optical disc, etc.) or through telecommunication lines (e.g., the Internet). Such a computer program(s) may be marketed as commercial software.

The controller **180** includes the plurality of ECUs. The plurality of ECUs may include, for example, the ECU **181** for speed control, the ECU **182** for steering control, the ECU **183** for implement control, the ECU **184** for self-driving control, the ECU **185** for path generation, and the ECU **186** for state estimation. The ECU **181** controls the prime mover **102,** the transmission **103** and brakes included in the drive device **240,** thus controlling the speed of the work vehicle **100.** The ECU **182** controls the hydraulic device or the electric motor included in the steering device **106** based on a measurement value of the steering wheel sensor **152,** thus controlling the steering of the work vehicle **100.** In order to cause the implement **300** to perform a desired operation, the ECU **183** controls the operation of the three-point link, the PTO shaft and the like that are included in the linkage device **108.** Also, the ECU **183** generates a signal to control the operation of the implement **300,** and transmits this signal from the communication device **190** to the implement **300.** Based on signals which are output from the positioning device **110,** the steering wheel sensor **152,** the angle-of-turn sensor **154** and the wheel axis sensor **156,** the ECU **184** performs computation and control to achieve self-driving. During self-driving, the ECU **184** sends the ECU **181** a command value to change the speed, and sends the ECU **182** a command value to change the steering angle. Based on the command value to change the speed, the ECU **181** controls the prime mover **102,** the transmission **103,** or the brakes to change the speed of the work vehicle **100.** Based on the command value to change the steering angle, the ECU **182** controls the steering device **106** to change the steering angle. The ECU **185** generates a target path for the work vehicle **100** and stores information on the target path in the storage device **170.** The ECU **185** determines a destination of the work vehicle **100** based on the work schedule stored in the storage device **170** and determines a path from the current position of the work vehicle **100** to the destination. The ECU **185** generates, for example, a path by which the work vehicle **100** can arrive at the destination within the shortest time period, as the target path, based on the environment map including the information on the roads stored in the storage device **170.** The ECU **186** estimates a state of the work vehicle **100** or the implement **300** based on a signal output from the state detection device **230,** and determines whether the preparation work is necessary or not. Upon determination that the preparation work is necessary, the ECU **186** determines the determination on a preparation site suitable for contents of the preparation work. When the preparation site is determined, the ECU **185** generates a target path to the preparation site. The ECU **185** stores the generated target path in the storage device **170.** The ECU **184** controls the drive device **240** to cause the work vehicle **100** to travel along the target path. Upon determination of the preparation site, the ECU **186** instructs the communication device **190** to transmit a notice to the first terminal device **400** used by the user and the second terminal device **500** used by the worker performing the preparation work at the preparation site.

Through the actions of these ECUs, the controller **180** realizes self-driving, determination on whether the preparation work is necessary or not, determination on the preparation site, generation of the target path, and communication with another device. During self-driving, the controller **180** controls the drive device **240** based on the position of the work vehicle **100** as measured or estimated by the positioning device **110** and the target path stored in the storage device **170.** As a result, the controller **180** can cause the work vehicle **100** to travel along the target path.

The plurality of ECUs included in the controller **180** may communicate with one another according to a vehicle bus standard such as, for example, a CAN (Controller Area Network). Instead of the CAN, faster communication methods may be used, e.g., Automotive Ethernet (registered trademark). Although the ECUs **181** to **186** are illustrated as individual corresponding blocks in FIG. **3****,** each of these functions may be implemented by a plurality of ECUs. Alternatively, an onboard computer that integrates the functions of at least some of the ECUs **181** to **186** may be provided. The controller **180** may include ECUs other than the ECUs **181** to **186,** and any number of ECUs may be provided in accordance with functionality. Each ECU includes a processing circuit including one or more processors.

The communication device **190** is a device including a circuit communicating with the implement **300,** the first terminal device **400,** the second terminal device **500** and the management device **600.** The communication device **190** includes circuitry to perform exchanges of signals complying with an ISOBUS standard such as ISOBUS-TIM, for example, between itself and the communication device **390** of the implement **300.** This allows the implement **300** to perform a desired operation, or allows information to be acquired from the implement **300.** The communication device **190** may further include an antenna and a communication circuit to exchange signals via the network **80** with communication devices of the first terminal device **400,** the second terminal device **500** and the management device **600.** The network **80** may include a 3G, 4G, 5G, or any other cellular mobile communications network and the Internet, for example. The communication device **190** may have the function of communicating with a mobile terminal that is used by a supervisor who is situated near the work vehicle **100.** With such a mobile terminal, communication may be performed based on any arbitrary wireless communication standard, e.g., Wi-Fi (registered trademark), 3G, 4G, 5G or any other cellular mobile communication standard, or Bluetooth (registered trademark).

The operational terminal **200** is a terminal for the user to perform a manipulation related to the travel of the work vehicle **100** and the operation of the implement **300,** and may also be referred to as a virtual terminal (VT). The operational terminal **200** may include a display device such as a touch screen panel, and/or one or more buttons. The display device may be a display such as a liquid crystal display or an organic light-emitting diode (OLED) display, for example. By manipulating the operational terminal **200,** the user can perform various manipulations, such as, for example, switching ON/OFF the self-driving mode, recording or editing an environment map, setting a target path, and switching ON/OFF the implement **300.** At least a part of these manipulations may also be realized by manipulating the operation switches **210.** The operational terminal **200** may be configured so as to be detachable from the work vehicle **100.** A user who is at a remote place from the work vehicle **100** may manipulate the detached operational terminal **200** to control the operation of the work vehicle **100.** Instead of the operational terminal **200,** the user may manipulate a computer on which necessary application software is installed, for example, the first terminal device **400,** to control the operation of the work vehicle **100.**

FIG. **5** is a schematic diagram showing an example of the operational terminal **200** and an example of the operation switches **210** both provided in the cabin **105.** In the cabin **105,** the switches **210,** including a plurality of switches that are manipulable to the user, are disposed. The operation switches **210** may include, for example, a switch to select the gear shift as to a main gear shift or a range gear shift, a switch to switch between a self-driving mode and a manual driving mode, a switch to switch between forward travel and backward travel, a switch to raise or lower the implement **300,** and the like. In a case where the work vehicle **100** only performs unmanned driving and lacks human driving functionality, the work vehicle **100** does not need to include the operation switches **210.**

The drive device **340** in the implement **300** shown in FIG. **3** performs operations necessary to perform the implement **300** to perform predetermined work. The drive device **340** includes a device suitable for uses of the implement **300,** for example, a hydraulic device, an electric motor, a pump or the like. The controller **380** controls the operation of the drive device **340.** In response to a signal that is transmitted from the work vehicle **100** via the communication device **390,** the controller **380** causes the drive device **340** to perform various operations. Moreover, a signal that is in accordance with the state of the implement **300** may be transmitted from the communication device **390** to the work vehicle **100.**

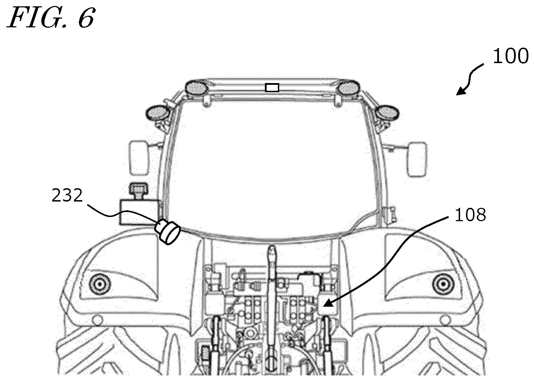

Now, an example of the state detection device **230** will be described with reference to FIG. **6****.**

FIG. **6** is a rear view showing an example configuration of a rear portion of the work vehicle **100.** The work vehicle **100** shown in FIG. **6** includes a camera **232** to capture an image of the implement **300** in the rear portion thereof. The camera **232** is an example of the state detection device **230.** In this example, the camera **232** is disposed so as to capture an image of a linking portion between the implement **300** and the linkage device **108** of the work vehicle **100.** The camera **232** may include an image sensor such as a CCD or a CMOS and a signal processing circuit to process a signal output from the image sensor. In this example, the ECU **186** in the controller **180** recognizes the state of attachment of the implement **300** based on the image captured by the camera **232.** The ECU **186** can recognize whether an implement **300** suitable for the agricultural work scheduled to be performed next is properly attached or not based on, for example, the image. The recognition may be performed by use of, for example, an algorithm using a learned model trained by machine learning. The ECU **186** can determine whether the preparation work such as replacement or maintenance of the implement **300** is necessary or not based on the results of the recognition.

In a case of determining that the preparation work such as replacement or maintenance of the implement **300** is necessary, the ECU **186** determines the preparation site where the preparation work is to be performed (e.g., a repair shop, a store, a warehouse of an acquaintance of the user, etc.). In the present embodiment, a database representing the correspondence between the types of the preparation work and positional information on the preparation sites is stored in the storage device **170** previously. The ECU **186** refers to the database to acquire the positional information on the preparation site where the necessary preparation work is to be performed, and transmits the positional information to the ECU **185.** The ECU **185** generates a target path to the preparation site based on the positional information. For example, a path by which the work vehicle **100** arrives at the preparation site from the current position thereof within the shortest time period may be generated as the target path. When generating the target path, the ECU **185** transmits the information on the target path to the ECU **184.** The ECU **184** controls the drive device **240** to cause the work vehicle **100** to travel along the target path.

The state detection device **230** may include a camera to capture an image of a portion other than the linking portion between the implement **300** and the work vehicle **100.** Such a camera may be disposed so as to capture a specific part of the implement **300** or the work vehicle **100.** For example, a camera to capture an image of a part such as a rotary claw, a mower blade or a planting claw may be disposed in accordance with the type of the implement **300** or the work vehicle **100.** In this case, the ECU **186** can estimate the degree of abrasion or damage of the part based on the image of the part, and determine whether the preparation work such as replacement or repair of the part is necessary or not based on the results of the estimation. Alternatively, the ECU **186** may detect abrasion of tires, tension or abrasion of crawlers, loosening of a chain or the like based on the image acquired by the camera capturing an image of the tires or the crawlers, and determine whether the preparation work is necessary or not.

The state detection device **230** may include a sensor to measure an amount of abrasion of a specific part of the work vehicle **100** or the implement **300** (e.g., a claw, a mower blade, etc.) instead of, or in addition to, the camera. Such a sensor may be, for example, a laser scanner, an ultrasonic sensor, or any other type of distance sensor. Such a sensor can measure the shape of the claw or the mower blade, and therefore, the amount of abrasion can be estimated based on the shape.

The implement **300** may be an implement using agricultural supplies to be consumed by agricultural work (e.g., fertilizers, seeds, agricultural chemicals, seedlings, etc.), for example, a spreader, a seeder, an agricultural chemical sprayer or a planting machine. Alternatively, the work vehicle **100** may a have a function of planting seedlings, like a rice transplanter. In this case, the state detection device **230** may include a sensor to measure a remaining amount of the supplies (e.g., a weight sensor, etc.). The controller may determine whether the preparation work of supplementing the supplies is necessary or not based on the remaining amount of the supplies as measured by the sensor.

The state detection device **230** may include a sensor to measure an amount of engine oil or a battery level. The ECU **186** can detect that there is shortage of the engine oil or that the battery level is too low based on a signal output from such a sensor. When detecting there is shortage of the engine oil or that the battery level is too low, the ECU **186** may determine that the preparation work such as replacement of the engine oil or the battery or charge of the battery is necessary.

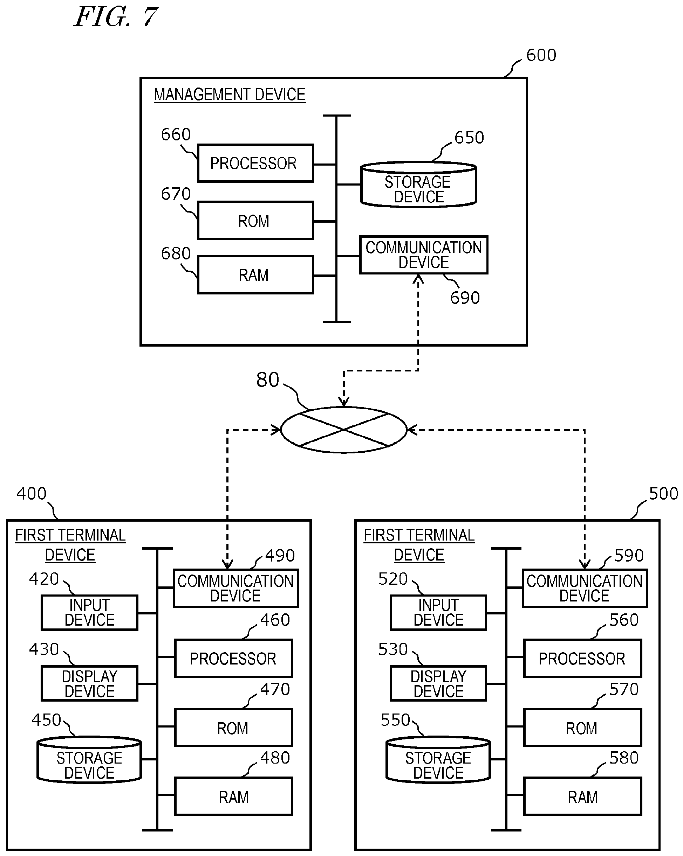

Now, a configuration of the management device **600,** the first terminal device **400** and the second terminal device **500** will be described. FIG. **7** is a block diagram showing an example of schematic hardware configuration of the management device **600,** the first terminal device **400** and the second terminal device **500.**

The management device **600** includes a storage device **650,** a processor **660,** a ROM (Read Only Memory) **670,** a RAM (Random Access Memory) **680,** and a communication device **690.** These component elements are communicably connected with each other via a bus. The management device **600** may act as a cloud server to manage the schedule of the agricultural work to be performed by the work vehicle **100** in the fields and support agriculture by use of the data managed by the management device **600** itself. For example, the user can create a work schedule by use of the first terminal device **400** and upload information on the work schedule to the management device **600** via the network **80.**

The communication device **690** is a communication module to communicate with the work vehicle **100,** the first terminal device **400** and the second terminal device **500** via the network **80.** The communication device **690** can perform wired communication in compliance with communication standards such as, for example, IEEE1394 (registered trademark) or Ethernet (registered trademark). The communication device **690** may perform wireless communication in compliance with Bluetooth (registered trademark) or Wi-Fi, or cellular mobile communication based on 3G, 4G, 5G or any other cellular mobile communication standard.

The processor **660** may be, for example, an integrated circuit including a central processing unit (CPU). The processor **660** may be realized by a microprocessor or a microcontroller. Alternatively, the processor **660** may be realized by an FPGA (Field Programmable Gate Array), a GPU (Graphics Processing Unit), an ASIC (Application Specific Integrated Circuit), an ASSP (Application Specific Standard Product), or a combination of two or more selected from these circuits. The processor **660** consecutively executes a computer program, describing commands to execute at least one process, stored in the ROM **670** and thus realizes a desired process.

The ROM **670** is, for example, a writable memory (e.g., PROM), a rewritable memory (e.g., flash memory) or a memory which can only be read from but cannot be written to. The ROM **670** stores a program to control operations of the processor **660.** The ROM **670** does not need to be a single storage medium, and may be an assembly of a plurality of storage mediums. A portion of the assembly of the plurality of storage memories may be a detachable memory.

The RAM **680** provides a work area in which the control program stored in the ROM **670** is once developed at the time of boot. The RAM **680** does not need to be a single storage medium, and may be an assembly of a plurality of storage mediums.

The storage device **650** mainly acts as a storage for a database. The storage device **650** may be, for example, a magnetic storage device or a semiconductor storage device. An example of the magnetic storage device is a hard disc drive (HDD). An example of the semiconductor storage device is a solid state drive (SSD). The storage device **650** may be a device independent from the management device **600.** For example, the storage device **650** may be a storage device connected to the management device **600** via the network **80,** for example, a cloud storage.

The first terminal device **400** includes an input device **420,** a display device **430,** a storage device **450,** a processor **460,** a ROM **470,** a RAM **480,** and a communication device **490.** These component elements are communicably connected with each other via a bus. The input device **420** is a device to convert an instruction from the user into data and input the data to a computer. The input device **420** may be, for example, a keyboard, a mouse or a touch panel. The display device **430** may be, for example, a liquid crystal display or an organic EL display. The processor **460,** the ROM **470,** the RAM **480,** the storage device **450** and the communication device **490** are substantially the same as the corresponding component elements described above regarding the example of the hardware configuration of the management device **600,** and will not be described again.

The second terminal device **500** includes an input device **520,** a display device **530,** a storage device **550,** a processor **560,** a ROM **570,** a RAM **580,** and a communication device **590.** These component elements are communicably connected with each other via a bus. The input device **520** is a device to convert an instruction from the user (e.g., the worker at the preparation site) into data and input the data to the computer. The input device **520** may be, for example, a keyboard, a mouse or a touch panel. The display device **530** may be, for example, a liquid crystal display or an organic EL display. The processor **560,** the ROM **570,** the RAM **580,** the storage device **550** and the communication device **590** are substantially the same as the corresponding component elements described above regarding the example of the hardware configuration of the management device **600,** and will not be described in repetition.

### [2. Operation]

Now, an operation of the work vehicle **100,** the first terminal device **400,** the second terminal device **500** and the management device **600** will be described.

### [2-1. Self-driving operation]

First, an example operation of self-traveling of the work vehicle **100** will be described.

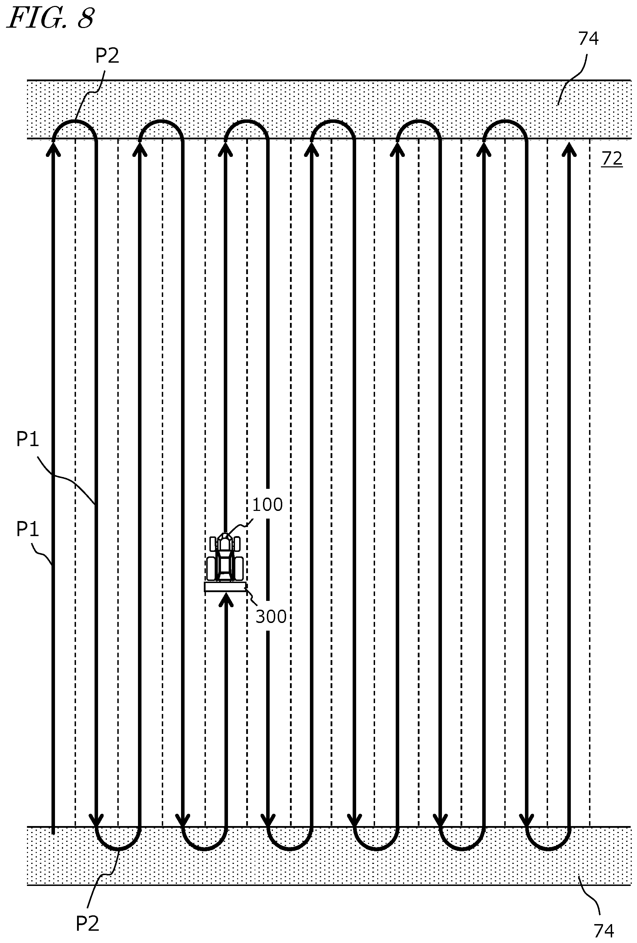

FIG. **8** is a diagram schematically showing an example of the work vehicle **100** automatically traveling along a target path in a field. In this example, the field includes a work area **72,** in which the work vehicle **100** performs work by using the implement **300,** and headlands **74,** which are located near an outer edge of the field. The user may specify which regions on the map of the field would correspond to the work area **72** and the headlands **74** in advance. The target path in this example includes a plurality of main paths **P1** parallel to each other and a plurality of turning paths **P2** interconnecting the plurality of main paths **P1**. The main paths **P1** are located in the work area **72,** whereas the turning paths **P2** are located in the headlands **74.** Although each of the main paths **P1** in FIG. **8** is illustrated as a linear path, each main path **P1** may also include a curved portion(s). Broken lines in FIG. **8** depict the working breadth of the implement **300.** The working breadth is previously set and recorded in the storage device **170.** The working breadth may be set and recorded by the user manipulating the operational terminal **200.** Alternatively, the working breadth may be automatically recognized and recorded when the implement **300** is connected to the work vehicle **100.** The interval between the plurality of main paths **P1** may be set so as to be matched to the working breadth. The target path may be generated based on the manipulation made by the user, before self-driving is begun. The target path may be generated so as to cover the entire work area **72** in the field, for example. Along the target path shown in FIG. **8****,** the work vehicle **100** automatically travels while repeatedly reciprocating from a beginning point of work to an ending point of work. Note that the target path shown in FIG. **8** is merely an example, and the target path may be arbitrarily determined.

Now, an example control by the controller **180** during self-driving will be described.

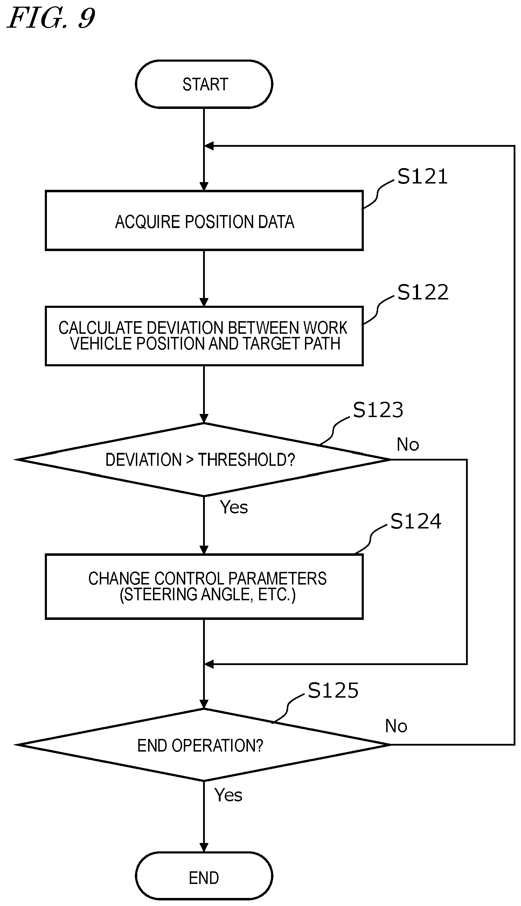

FIG. **9** is a flowchart showing an example operation of steering control to be performed by the controller **180** during self-driving. During travel of the work vehicle **100,** the controller **180** performs automatic steering by performing the operation from steps **S121** to **S125** shown in FIG. **8****.** The speed of the work vehicle 100 will be maintained at a previously-set speed, for example. First, during travel of the work vehicle **100,** the controller **180** acquires data representing the position of the work vehicle **100** that is generated by the positioning device **110** (step **S121).** Next, the controller **180** calculates a deviation between the position of the work vehicle **100** and the target path (step **S122).** The deviation represents the distance between the position of the work vehicle **100** and the target path at that moment. The controller **180** determines whether the calculated deviation in position exceeds the previously-set threshold or not (step **S123).** If the deviation exceeds the threshold, the controller **180** changes a control parameter of the steering device included in the drive device **240** so as to reduce the deviation, thus changing the steering angle (step **S124).** If the deviation does not exceed the threshold at step **S123,** the operation of step **S124** is omitted. At the following step **S125,** the controller **180** determines whether a command to end the operation has been received or not. The command to end the operation may be given when the user has instructed that self-driving be suspended through remote manipulations, or when the work vehicle **100** has arrived at the destination, for example. If the command to end the operation has not been given, the control returns to step **S121** and the controller **180** performs substantially the same operation based on a newly measured position of the work vehicle **100.** The controller **180** repeats the operation from steps **S121** to **S125** until a command to end the operation is given. The aforementioned operation is executed by the ECUs **182** and **184** in the controller **180.**

In the example shown in FIG. **9****,** the controller **180** controls the drive device **240** based only on the deviation between the position of the work vehicle **100** as identified by the positioning device **110** and the target path. Alternatively, a deviation in terms of directions may further be considered in the control. For example, when a directional deviation exceeds a previously-set threshold, where the directional deviation is an angle difference between the orientation of the work vehicle **100** as identified by the positioning device **110** and the direction of the target path, the controller **180** may change the control parameter of the steering device of the drive device **240** (e.g., steering angle) in accordance with the deviation.

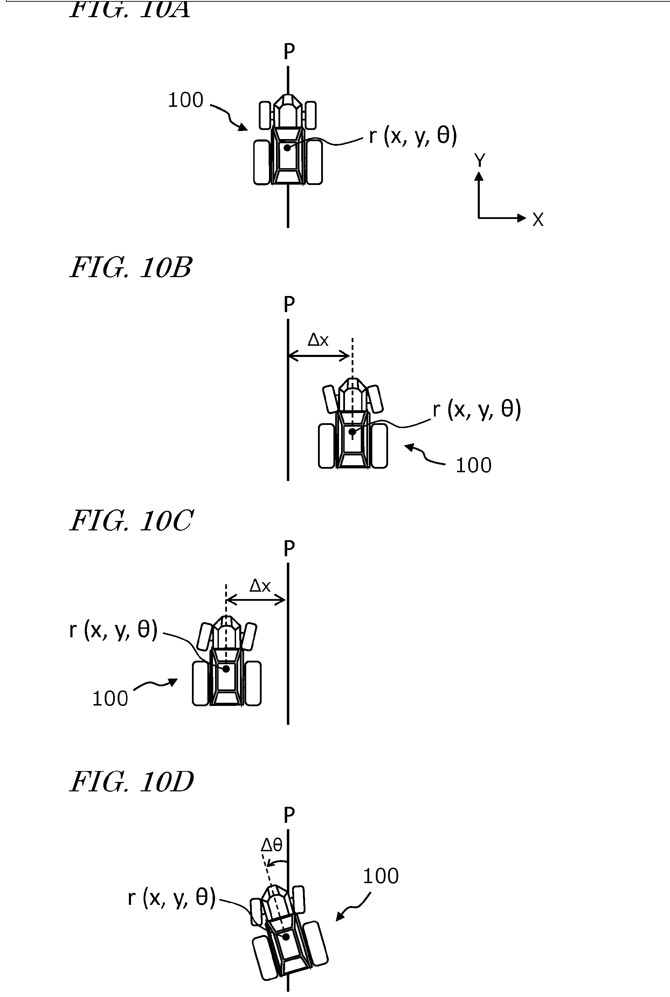

Hereinafter, with reference to FIGS. **10A** to **10D****,** an example of steering control by the controller **180** will be described more specifically.

FIG. **10A** is a diagram showing an example of the work vehicle **100** traveling along a target path **P.** FIG. **10B** is a diagram showing an example of the work vehicle **100** at a position which is shifted rightward from the target path **P.** FIG. **10C** is a diagram showing an example of the work vehicle **100** at a position which is shifted leftward from the target path **P.** FIG. **10D** is a diagram showing an example of the work vehicle **100** oriented in an inclined direction with respect to the target path **P.** In these figures, the pose, i.e., the position and orientation, of the work vehicle **100** as measured by the positioning device **110** is expressed as r(x,y,θ). Herein, (x,y) are coordinates representing the position of a reference point on the work vehicle **100** in an XY coordinate system, which is a two-dimensional coordinate system fixed to the globe. In the examples shown in FIGS. **9A** to **9D,** the reference point on the work vehicle **100** is at a position, on the cabin, where a GNSS antenna is disposed, but the reference point may be at any arbitrary position. θ is an angle representing the measured orientation of the work vehicle **100.** Although the target path **P** is shown parallel to the Y axis in the examples illustrated in these figures, the target path **P** may not necessarily be parallel to the Y axis, in general.

As shown in FIG. **10A****,** in a case where the position and orientation of the work vehicle **100** are not deviated from the target path **P,** the controller **180** maintains the steering angle and speed of the work vehicle **100** without changing them.

As shown in FIG. **10B****,** when the position of the work vehicle **100** is shifted rightward from the target path **P,** the controller **180** changes the steering angle so that the traveling direction of the work vehicle **100** will be inclined leftward, thus bringing the work vehicle **100** closer to the path **P.** Herein, not only the steering angle but also the speed may be changed. The magnitude of the steering angle may be adjusted in accordance with the magnitude of a positional deviation Δx, for example.

As shown in FIG. **10C****,** when the position of the work vehicle **100** is shifted leftward from the target path **P,** the controller **180** changes the steering angle so that the traveling direction of the work vehicle **100** will be inclined rightward, thus bringing the work vehicle **100** closer to the path **P.** In this case, too, not only the steering angle but also the speed may be changed. The amount of change of the steering angle may be adjusted in accordance with the magnitude of the positional deviation Δx, for example.

As shown in FIG. **10D****,** in a case where the position of the work vehicle **100** is not considerably deviated from the target path **P** but its orientation is nonetheless different from the direction of the target path **P,** the controller **180** changes the steering angle so that the directional deviation Δθ will become smaller. In this case, too, not only the steering angle but also the speed may be changed. The magnitude of the steering angle may be adjusted in accordance with the magnitudes of the positional deviation Δx and the directional deviation Δθ, for example. For instance, the amount of change of the steering angle (which is in accordance with the directional deviation Δθ) may be increased as the absolute value of the positional deviation Δx decreases. When the positional deviation Δx has a large absolute value, the steering angle will be changed greatly in order for the work vehicle **100** to return to the path **P,** so that the directional deviation Δθ will inevitably have a large absolute value. Conversely, when the positional deviation Δx has a small absolute value, the directional deviation Δθ needs to become closer to zero. Therefore, it may be advantageous to introduce a relatively large weight (i.e., control gain) for the directional deviation Δθ in determining the steering angle.

For the steering control and speed control of the work vehicle **100,** control techniques such as PID control or MPC (Model Predictive Control) may be applied. Applying these control techniques will make for smoothness of the control of bringing the work vehicle **100** closer to the target path **P.**

Note that, when an obstacle is detected by one or more obstacle sensors **130** during travel, the controller **180** stops the work vehicle **100.** Alternatively, when an obstacle is detected, the controller **180** may control the drive device **240** so as to avoid the obstacle. Based on the data output from the LiDAR sensor **140,** the controller **180** is able to detect an object located at a relatively distant position from the work vehicle **100** (e.g., another vehicle, a pedestrian, etc.). By performing the speed control and steering control so as to avoid the detected object, the controller **180** can achieve self-traveling on public roads.

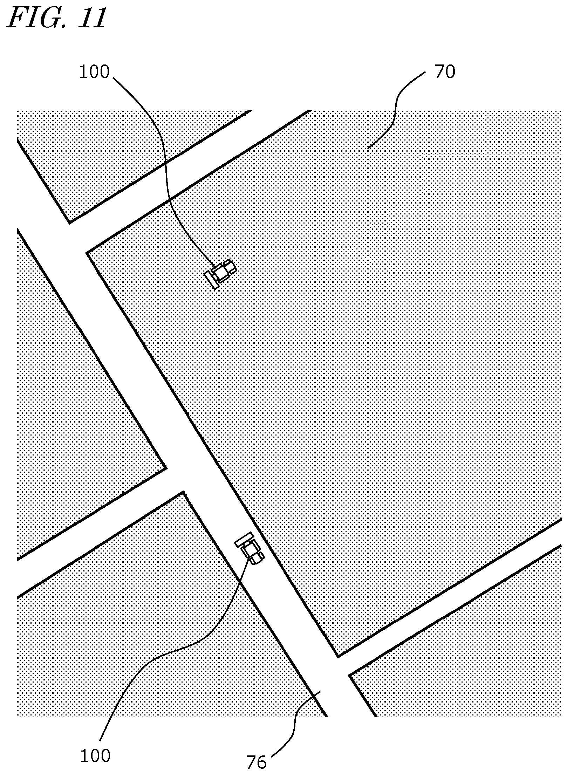

The work vehicle **100** according to the present embodiment can automatically travel inside the field and outside the field in an unmanned manner. FIG. **11** is a diagram schematically showing an example of state where a plurality of the work vehicles **100** are performing self-traveling inside a field **70** and on a road **76** outside the field **70.** In the storage device **170,** information on the environment map including the field and public roads outside the field and on the target path is recorded. The environment map and the target path may be generated by, for example, the ECU **185** of the controller **180.** In a case of traveling on a public road, the work vehicle **100** travels along the target path while sensing the surroundings thereof by use of the sensing devices such as the cameras **120** and the LiDAR sensor **140,** with the implement **300** being raised. During travel, the target path may be changed in accordance with the state.

### [2-2. Creation of a work schedule]

The work vehicle **100** according to the present embodiment automatically moves between the fields and performs agricultural work at each of the fields according to a work schedule stored in the storage device **170.** The work schedule may include information on a plurality of tasks of agricultural work to be performed over a plurality of working days. Specifically, the work schedule may be a database including information indicating which agricultural machine is to perform which task of agricultural work in which field at which point of time for each working day. The work schedule may be created by the processor **660** of the management device **600** based on the information input by the user to the first terminal device **400.** Hereinafter, an example of method for creating the work schedule will be described.

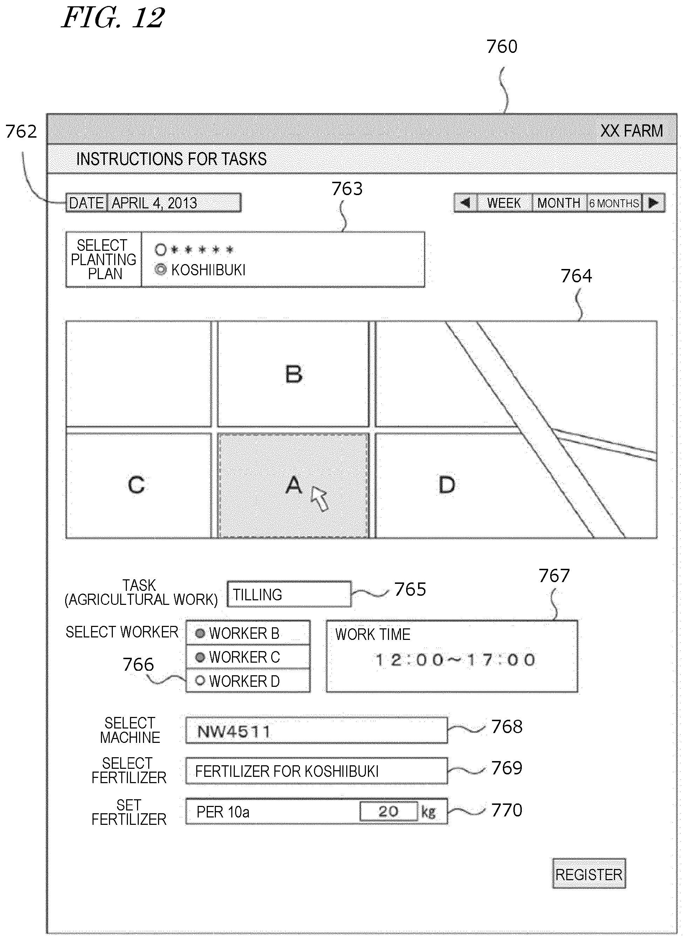

FIG. **12** is a diagram showing an example of setting screen **760** displayed on the display device **430** of the first terminal device **400.** In response to a manipulation performed by the user by use of the input device **420,** the processor **460** of the first terminal device **400** activates an application for schedule creation to cause the display device **430** to display the setting screen **760** as shown in FIG. **12****.** The user can input information necessary to create a work schedule on the setting screen **760.**

FIG. **12** shows an example of the setting screen **760** in a case where tilling accompanied by spraying of a fertilizer is to be performed as the agricultural work in a field for rice farming. The setting screen **760** is not limited to the one shown in the figure, and may be changed when necessary. The setting screen **760** in the example of FIG. **12** includes a date setter **762,** a planting plan selector **763,** a field selector **274,** a work selector **765,** a worker selector **766,** a time setter **767,** a machine selector **768,** a fertilizer selector **769,** and a spray amount setter **770.**

The date setter **762** displays a data input by the input device **420.** The input date is set as the day when the agricultural work is to be performed.

The planting plan selector **763** displays a list of names of planting plans created previously. The user can select a desired planting plan from the list. The planting plan is created previously for each of types or each of breeds of the crop, and is recorded in the storage device **650** of the management device **600.** The planting plan is a plan regarding which crop is to be planted in which field. The planting plan is created by, for example, a manager managing a plurality of fields before the crop is planted in the field. The field is a demarcated farm in which the crop is to be planted. In the example of FIG. **12****,** a planting plan for rice breed "KOSHIIBUKI" is selected. In this case, the contents set by the setting screen **760** are associated with the planting plan of "KOSHIIBUKI".

The field selector **764** displays fields in the environment map. The user can select any field from the fields displayed. In the example of FIG. **12****,** an area indicating "field A" is selected. In this case, the selected "field A" is set as the field where the agricultural work is to be performed.

The work selector **765** displays a plurality of types of agricultural work necessary to grow the selected crop. The user can select one type of agricultural work from the plurality of types of agricultural work. In the example of FIG. **12****,** "tilling" is selected from the plurality of types of agricultural work. In this case, the selected "tilling" is set as the agricultural work to be performed.

The worker selector **766** displays workers registered previously. The user can select one or more workers from the plurality of workers displayed. In the example of FIG. **12****,** "worker B" and "worker C" are selected from the plurality of workers. In this case the "worker B" and the "worker C" selected are set as the workers in charge of performing or managing the agricultural work. In the present embodiment, the agricultural machine performs agricultural work automatically. Therefore, the workers do not need to actually perform the agricultural work, and may merely remotely monitor the agricultural work performed by the agricultural machine.

The time setter **767** displays a work time period input from the input device **420.** The work time period is specified by a point of time to begin the agricultural work and a point of time to finish the agricultural work. The input work time period is set as the time period at which the agricultural work is scheduled to be performed.

The machine selector **768** is used to set the agricultural machine to be used for the agricultural work. The machine selector **768** may display, for example, the types or models of the agricultural machines registered by the management device **600** and the types, models, etc. of usable implements. The user can select a specific machine from the machines displayed. In the example of FIG. **12****,** the implement of model "NW4511" is selected. In this case, this implement is set as the machine to be used for the agricultural work.

The fertilizer selector **769** displays names of a plurality of fertilizers registered by the management device 600 previously. The user can select a specific fertilizer from the plurality of fertilizers displayed. The selected fertilizer is set as the fertilizer to be used for the agricultural work.

The spray amount setter **770** displays a numerical value input to the input device **420.** The input numerical value is set as the spray amount.

When the planting plan, the field, the agricultural work, the worker, the work time period, the fertilizer and the spray amount are input to the setting screen **760** and "register" is selected, the communication device **490** of the first terminal device **400** transmits the input information to the management device **600.** The processor **660** of the management device **600** causes the storage device **650** to store the received information. Based on the received information, the processor **660** creates a schedule of the agricultural work to be performed by each agricultural machine and causes the storage device **650** to store the schedule.

The information on the agricultural work to be managed by the managing device **600** is not limited to the above-described information. For example, the type and the spray amount of the agricultural chemical to be used in the field may be set by the setting screen **760.** Information on agricultural work other than the type of agricultural work shown in FIG. **12** may be set by the setting screen **760.**

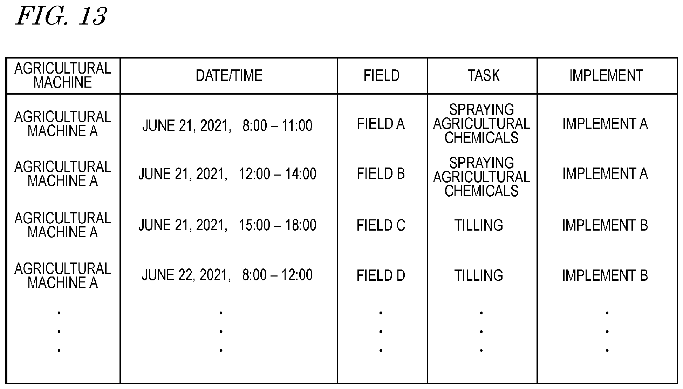

FIG. **13** is a table showing an example of schedule of agricultural work created by the management device **600.** The schedule in this example includes information indicating the date and time of the agricultural work, the field for the agricultural work, the contents of the work, and the implement to be used, for each of registered agricultural machines. The schedule may include information on, for example, agricultural chemicals or the spray amounts of the agricultural chemicals, in accordance with the contents of the work, in addition to the information shown in FIG. **13****.** The processor **660** of the management device **600** instructs the work vehicle **100** to perform the agricultural work according to such a schedule. The schedule is downloaded by the controller **180** of the work vehicle **100,** and is also stored in the storage device **170.** In this case, the controller **180** may spontaneously start the operation according to the schedule stored in the storage device **170.**

### [2-3. Determination on whether preparation work is necessary or not, and move to a preparation site]

Now, an example of specific operation of determining whether preparation work is necessary or not and of moving the work vehicle **100** to a preparation site will be described.

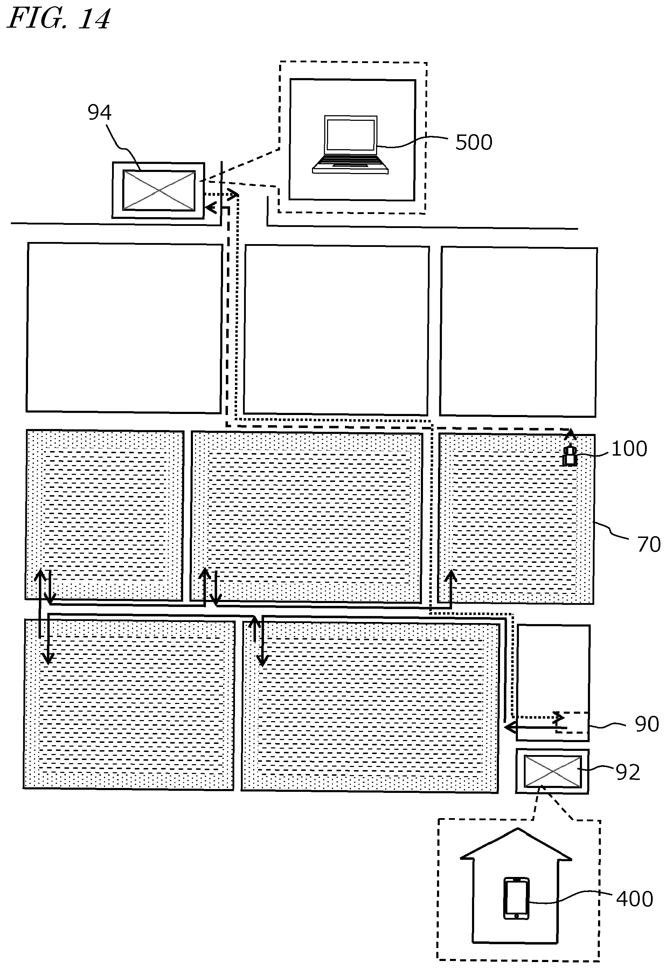

FIG. **14** is a diagram showing an operation of the work vehicle **100** of moving to a preparation site **94,** where the preparation work is to be performed for the next task of agricultural work. FIG. **14** shows, as an example, a plurality of the fields **70,** where the work vehicle **100** is to perform agricultural work, a repository **90** for the work vehicle **100,** a house **92** of the user performing remote monitoring of the work vehicle **100,** and a preparation site **94,** where the preparation work is to be performed. Positions of the fields **70,** the repository **90** and the preparation site **94** are stored in the storage device **170** previously together with the data on the environment map. The repository **90** may be, for example, a warehouse, a barn or a parking area adjacent to the house **92** or an office of the user. The preparation site **94** may be, for example, a repair shop, a sales outlet of parts or implements, a warehouse of supplies, or a workshop of an individual worker. The work vehicle **100** performs agricultural work in one or more fields on one day. Which task of agricultural work is to be performed in which field **70** on which date/time by the work vehicle **100** may be determined according to the schedule transmitted from the management device **600.** Data on the schedule is previously downloaded and stored in the storage device **170.** The controller **180** controls the drive device **240** so that the work vehicle **100** performs the agricultural work at the specified field **70** at the specified points of time according to the schedule.

FIG. **14** shows a path along which the work vehicle **100** is to travel, by arrow lines. The solid arrow lines represent an example of path of the work vehicle **100** in a case where the work vehicle **100** departs from the repository **90** and enters the fields **70.** The broken arrow line represents an example of path of the work vehicle **100** in a case where the work vehicle **100** finishes the agricultural work in the fields **70** and moves to the preparation site **94.** The dotted arrow line represents an example of path of the work vehicle **100** in a case where the work vehicle **100** returns from the preparation site **94** to the repository **90.**

In this example, the work vehicle **100** departs from the repository **90,** sequentially visits the plurality of fields **70** where the agricultural work is scheduled for the day, to perform the agricultural work shown in the schedule in each of the fields **70.** In each field **70,** the work vehicle **100** performs the agricultural work while automatically traveling by, for example, the method described above with reference to FIG. **8****.** When the agricultural work is finished in one field **70,** the work vehicle **100** enters the next field **70** and performs the agricultural work in substantially the same manner. In this manner, the work vehicle **100** automatically performs the agricultural work in the plurality of fields **70.** After, for example, all the tasks of agricultural work scheduled for the day are completed, or after each task of agricultural work is finished, the controller **180** determines whether preparation work is necessary or not based on a signal output from the state detection device **230.** For example, as described above with reference to FIG. **6****,** the controller **180** can determine whether or not a defect such as a malfunction is occurring to a part of the work vehicle **100** or the implement **300** based on the image of the part of the work vehicle **100** or the implement **300** captured by the camera **232.** Alternatively, the controller **180** can determine whether there is shortage of the supplies or not based on a signal output from the sensor to measure the remaining amount of the supplies such as fertilizers, seeds, agricultural chemicals or seedlings. Based on the results of the determination, the controller **180** determines whether or not the preparation work, such as replacement or maintenance of a part of the work vehicle **100** or the implement **300** or replenishment of the supplies, is necessary.

Upon determination that the preparation work is necessary, the controller **180** refers to the database stored in the storage device **170** to determine the preparation site **94** where the preparation work is to be performed. The controller **180** generates a target path to the preparation site **94,** and controls the drive device **240** so that the work vehicle **100** travels along the target path. The controller **180** generates a target path to the preparation site **94** from, for example, the field **70** where the final task of agricultural work of all the tasks of agricultural work scheduled for the day, or any of the fields **70** where the agricultural work is completed. That is, the controller **180** generates a target path along a road extending at least from the field **70** to the preparation site **94** on the map.

As a result, the work vehicle **100** can automatically move to the preparation site **94** along the target path. FIG. **14** shows an example of target path to the preparation site **94,** by the broken arrow line. For example, a path by which the work vehicle **100** arrives at the preparation site **94** within the shortest time period may be selected as the target path.

During the move, the work vehicle **100** goes to the preparation site **94** while detecting an obstacle such as a pedestrian or another vehicle by use of the obstacle sensors **130,** the LiDAR sensor **140** and the cameras **120** and controlling the steering and speed so as to avoid the obstacle. The work vehicle **100** recognizes traffic lights based on, for example, images captured by the cameras **120,** and stops at a red light and moves forward at a green light.

When moving the work vehicle **100** to the preparation site **94,** The controller **180** transmits a notice to the first terminal device **400** used by the user at the house **92** or another place and the second terminal device **500** used by the worker performing the preparation work at the preparation site **94.** This notice may include, for example, the contents of the work and the point of time when the work vehicle **100** is scheduled to arrive at the preparation site **94.** The notice may be transmitted from the work vehicle **100** to the first terminal device **400** and the second terminal device **500** directly or via the management device **600.**

At the preparation site **94,** the preparation work such as, for example, replacement or inspection of a part of the implement **300** or supplement of the supplies is performed. The contents of the preparation work are notified to the second terminal device **500** previously, so that the worker can prepare, for example, a part for replacement, tools for repair, or supplies to be supplemented, based on the notice. When the work vehicle **100** arrives at the preparation site **94,** the worker can begin to perform the preparation work promptly. When the preparation work is completed, the worker manipulates the second terminal device **500** to perform a process for the completion of the work.

When the process for the completion of the work is performed, the second terminal device **500** transmits a signal indicating that the preparation work has been completed to the communication device **190** of the work vehicle **100.** The signal may be transmitted to the work vehicle **100** via the management device **600.** Upon receipt of the signal, the controller **180** of the work vehicle **100** generates a path to the repository **90** or to the field where the next task of agricultural work is scheduled, and moves the work vehicle **100** along the path.

Upon receipt of the completion notice, the controller **180** may transmit a notice indicating that the preparation work has been completed to the first terminal device **400** used by the user. This notice may include, for example, information indicating that the preparation work has been completed and indicating the point of time when the work vehicle **100** is scheduled to arrive at the repository **90.** In a case where there is a charge for the preparation work, the notice may include information on the fee for the preparation work. The fee for the preparation work may be determined in accordance with the contents of the preparation work. The fee may be determined by the worker or determined previously in accordance with the contents of the preparation work. Information on the fee for the contents of the preparation work may be stored in, for example, the storage device **650** of the management device **600.** The second terminal device **500** may acquire the information on the fee for the contents of the preparation work performed and determine the fee. In a case where the preparation work is performed by an individual such as an acquaintance of the user, the preparation work may be performed free of charge.

FIG. **14** shows an example of path along which the work vehicle **100** is to move after the preparation work is completed, by the dotted arrow line. In the example shown in FIG. **14****,** after the preparation work is completed, the controller **180** generates a path from the preparation site **94** toward the previously-set repository **94,** and moves the work vehicle **100** along the path. For example, the controller **180** generates a target path along a road extending, for example, at least from the preparation site **94** to the repository **90** on the map.

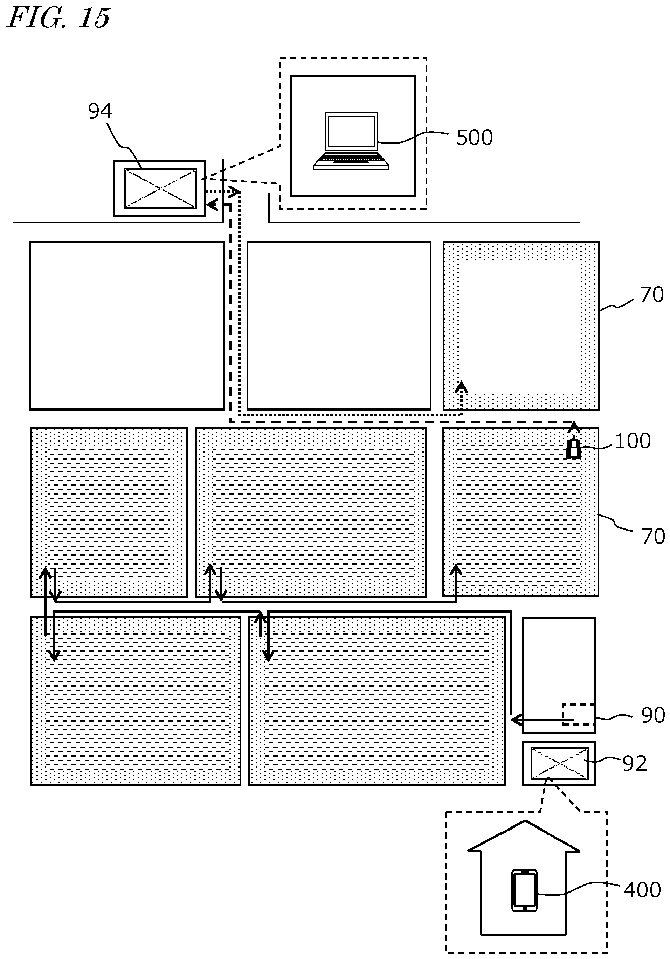

As a result, the work vehicle **100** automatically moves to the repository **94.** This operation may be performed in a case where, for example, after the final task of agricultural work among the tasks of agricultural work scheduled for the day was finished, the preparation work was performed for the next task of agricultural work scheduled for the next day or thereafter. In a case where there is still a task of agricultural work to be completed on the day after the preparation work, as shown in FIG. **15****,** the controller **180** may move the work vehicle **100** to the field **70** where the next task of agricultural work is to be performed so that the work vehicle **100** performs the agricultural work.

In the above-described example, the controller **180** determines whether the preparation work is necessary or not after the final task of agricultural work scheduled for the day is finished, or after each task of agricultural work is finished. The embodiment of the present disclosure is not limited to such an example. For example, before the agricultural work for the day is begun, the controller **180** may determine whether the preparation work is necessary or not for the first agricultural work for the day.

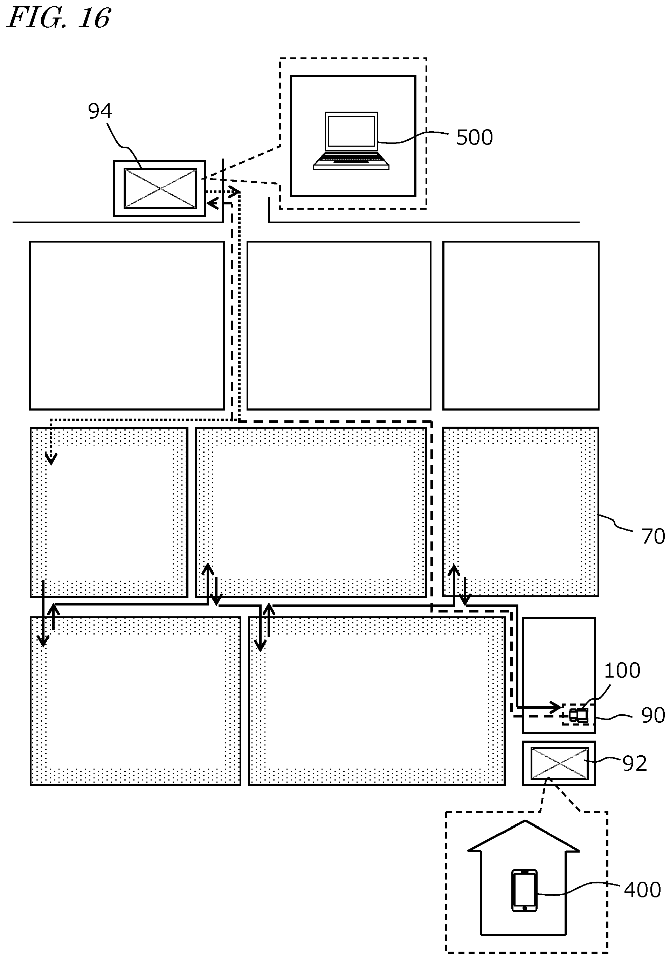

FIG. **16** is a diagram showing an example of path generated in a case where it is determined that the preparation work is necessary before the work vehicle **100** begins the agricultural work for the day. In this example, the controller **180** of the work vehicle **100** determines whether or not the preparation work, such as replacement of a part or the implement **300** or replenishment of the supplies, is necessary to perform the first task of agricultural work for the day, based on an output from one or more sensors. In a case where the preparation work is necessary, the controller **180** generates a path to the preparation site **94** suitable for the contents of the preparation work. FIG. **16** shows an example of path generated in this case, by the broken arrow line. The controller **180** generates a path (target path) along a road extending at least from the repository **90** to the preparation site **94** suitable for the contents of the preparation work on the map, and moves the work vehicle **100** along the generated path.

As a result, the necessary preparation work is performed before the agricultural work is performed. After the agricultural work is completed, as represented by the dotted arrow line in FIG. **16****,** the controller **180** generates a path along a road extending from the preparation site **94** to the field **70** where the first task of agricultural work for the day is to be performed on the map, and moves the work vehicle **100** along the path. As a result, the work vehicle **100** can begin the agricultural work in a state where the necessary preparation work is completed.

After the preparation work, as represented by the solid arrow lines in FIG. **16****,** the work vehicle **100** sequentially moves to the plurality of fields **70** where the agricultural work is scheduled for the day, to perform the agricultural work. When all the tasks of agricultural work are finished, the work vehicle **100** returns to the repository **90.** In this example also, the controller **180** may determine whether the preparation work is necessary or not when the agricultural work in each of the fields **70** is finished or when all the tasks of agricultural work are finished. Upon determination that the preparation work is necessary, the controller **180** determines the preparation site suitable for the contents of the preparation work and moves the work vehicle **100** to the preparation site. The preparation site determined at this point may be the same as, or different from, the preparation site **94** where the preparation work was performed before.

The operation shown in FIG. **16** is also applicable to the case where the work vehicle **100** departs from the repository **90** without no implement attached thereto and the preparation work of attaching an implement is performed at the preparation site **94.** For example, a case is assumed where a specific implement is necessary to perform the first task of agricultural work for the day but the specific implement is not usable due to a malfunction. In this case, the work vehicle **100** may depart from the repository **90** with no implement being attached thereto. When detecting that no implement is attached based on an output from the sensor, the controller **180** may determine that the preparation work of attaching the implement is necessary. The controller **180** determines the preparation site **94** where the preparation work can be performed, and causes the work vehicle **100** to travel toward the preparation site **94.** The preparation site **94** may be, for example, a sales outlet of the implement or a warehouse of an acquaintance of the user (e.g., another farmer). According to the present embodiment, the operation of purchasing an implement at a sales outlet or borrowing an implement at the house of another farmer can be automated. In the present disclosure, attachment of an implement from a state where no implement is attached as in this example is construed as being encompassed in "replacement".

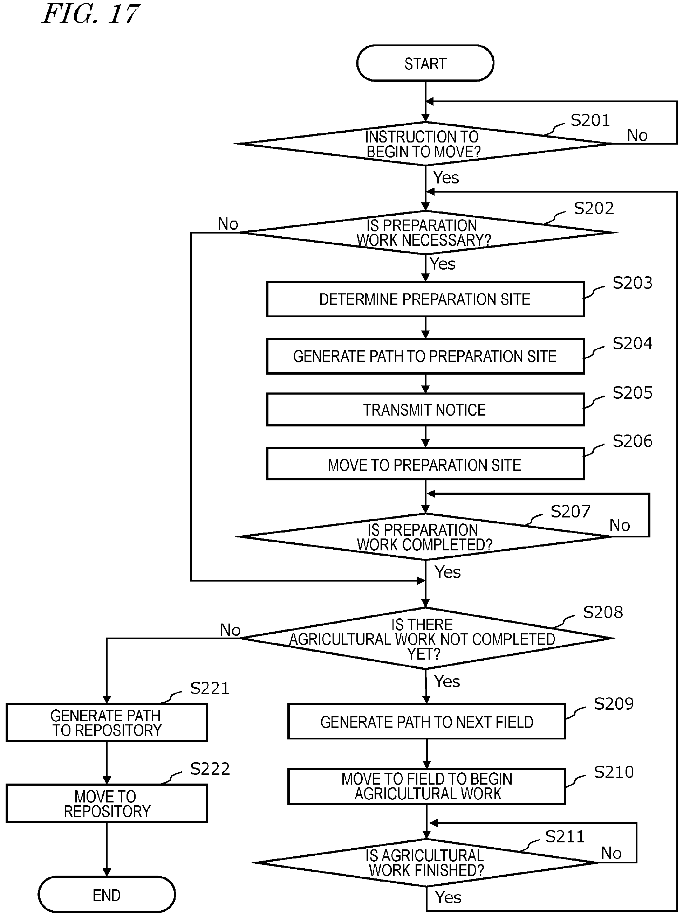

Now, with reference to FIG. **17****,** an example operation of the controller **180** will be described in more detail.

FIG. **17** is a flowchart showing an example of control method executed by the controller **180.** In this example, the work vehicle **100** is stopped at the repository **90** before beginning to move for agricultural work. In this state, the controller **180** waits for an instruction to begin to move from the management device **600** (step **S201).** The processor **660** of the management device **600** instructs the work vehicle **100** to begin to move when a point of time to begin the first task of agricultural work for the day approaches, according to, for example, the schedule (see FIG. **13****)** stored in the storage device **650.**

In the example of FIG. **17****,** upon receipt of the instruction to begin to move, the controller **180** determines whether preparation work is necessary or not (step **202).** As described above, whether the preparation work is necessary or not may be determined based on a signal output from the one or more sensors included in the state detection device **230.** When no preparation work is necessary, the operation advances to step **S208.** When the preparation work is necessary, the controller **180** determines the preparation site suitable for the contents of the preparation work (step **S203).** The controller **180,** for example, refers to the database stored in the storage device **170** to determine the preparation site suitable for the necessary preparation work.

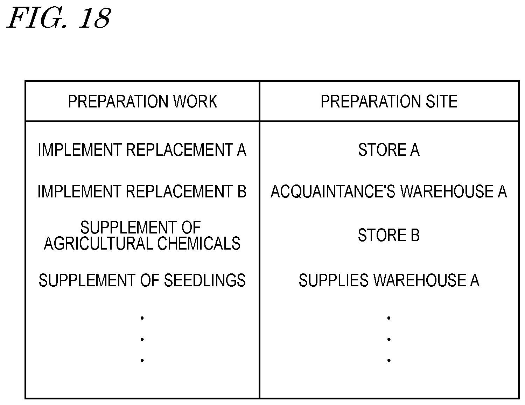

FIG. **18** is a table showing an example of database representing the correspondence between the contents of the preparation work and the preparation sites. Such a database may be previously created and stored in the storage device **170.** The controller **180** can refer to the database to determine an appropriate preparation site based on the necessary contents of the preparation work. The database may include positional information on each of the preparation sites. Alternatively, the positional information on each of the preparation sites may be recorded in the storage device **170** as another data. The database may include information on the fee for the contents of the preparation work. The fee may be determined individually by the business operator of each of the preparation sites.

In the example of FIG. **17****,** upon determination of the preparation site, the controller **180** generates a path to the preparation site based on the positional information on the preparation site (step **S204).** For example, the controller **180** determines a path by which the work vehicle **100** can arrive at the preparation site within the shortest time period. Next, the controller **180** instructs the communication device **190** to transmit a notice to the second terminal device **500** (step **S205)**. The notice may include information on the contents of the work and the point of time when the work vehicle **100** is scheduled to arrive at the preparation site. The information on the contents of the work may be information on, for example, the necessary parts, the implement, or the types and the amounts of the supplies. The worker at the preparation site checks at the notice to prepare for the preparation work. The controller **180** may transmit a notice indicating that the preparation work is to be performed also to the first terminal device **400.** Such a notice allows the user to learn that the preparation work is to be performed. In a case where the schedule is to be changed because of the preparation work, the controller **180** may transmit a notice including information on the post-change schedule from the communication device **190** to the first terminal device **400.** The post-change schedule may be, for example, created by the processor **660** of the management device **600** and transmit to the controller **180.**

Next, the controller **180** starts controlling the drive device **240** so that the work vehicle **100** moves to the preparation site **94** (step **S206).** The controller **180** controls the steering and travel speed of the work vehicle **100** sensing the surroundings thereof by use of the sensing devices such as the cameras **120** and the LiDAR sensor **140.** In this manner, the work vehicle **100** moves toward the preparation site **94** while avoiding obstacles.

When the work vehicle **100** arrives at the preparation site **94,** the preparation work is performed. When the preparation work is completed, the worker at the preparation site **94** manipulates the second terminal device **500** to transmit a signal indicating that the preparation work has been completed to the work vehicle **100.** Based on whether the signal indicating the completion of the preparation work has arrived or not, the controller **180** determines whether the preparation work has been completed or not (step **S207).**

When the preparation work is completed, the controller **180** refers to the schedule to determine whether or not there is still a task of agricultural work not completed yet among the tasks of agricultural work scheduled for the day (step **S208).** In a case where there is still a task of agricultural work not completed yet, the controller **180** generates a path to the field **70** where the next task of agricultural work is to be performed (step **S209).** The controller **180** moves the work vehicle **100** to the field **70** and causes the work vehicle **100** to begin to perform the agricultural work (step **S210).** In the field **70,** the controller **180** controls the work vehicle **100** in, for example, the method described above with reference to FIG. **8** so that the work vehicle **100** performs the tasked travel. When the agricultural work is finished (Yes in step **S211),** the controller **180** returns the operation to step **S202,** and determines whether the preparation work is necessary or not again for the next task of agricultural work. In a case where all the tasks of agricultural work scheduled for the day are finished, the controller **180** determines whether the preparation work is necessary or not for the agricultural work scheduled for the next working day or thereafter. After this, substantially the same operation is repeated until it is determined in step **S208** that there is no task of agricultural work not performed yet.

When it is determined in step **S208** that all the tasks of agricultural work scheduled for the day are completed, the controller **180** generates a path to the repository **90** (step **S221).** The controller **180** generates a path to the repository **90** based on the position of the work vehicle **100** at that moment acquired from the positioning device **110** and the position of the repository **90** and the environment map recorded in the storage device **170** previously. The controller **180** controls the drive device **240** so that the work vehicle **100** moves to the repository **90** along the path (step **S222).**

As a result of the above-described operation, the work vehicle **100** can determine whether the preparation work is necessary or not for the next task of agricultural work scheduled, move to the preparation site **94** where the preparation work is to be performed, when the preparation work is necessary, and return to the repository **90** after the preparation work is finished. According to the present embodiment, the work vehicle **100** automatically performs the above-described operation without the user instructing the work vehicle **100.** Therefore, the preparation work necessary to perform the next task of agricultural work can be performed efficiently.

In the example of FIG. **17****,** the controller **180** determines whether the preparation work is necessary or not each time the agricultural work in one field **70** is finished. Instead of executing such an operation, the controller **180** may determine whether the preparation work is necessary or not only when all the tasks of agricultural work scheduled for the day are finished.

### (Modification of embodiment 1)

The configuration and operation in the above-described embodiment are merely an example, and the present disclosure is not limited to the above-described embodiment. Hereinafter, a modification of embodiment 1 will be described.

In the example shown in FIG. **18****,** one preparation site corresponds to one type of the preparation work. The present disclosure is not limited to such an example. A plurality of candidate preparation sites may be set for one type of the preparation work. In this case, the controller **180** may transmit a signal requesting performance of the preparation work to a computer at one candidate preparation site selected from the plurality of candidate preparation sites. When receiving a response indicating that it is possible to perform the preparation work from the computer, the controller **180** may determine the candidate preparation site as the preparation site. By contrast, when not receiving a response indicating that it is possible to perform the preparation work from the computer, the controller **180** may return the work vehicle **100** to the repository **90** without determining the preparation site.

The controller **180** may transmit a signal requesting performance of the preparation work to a first computer at a first candidate preparation site selected from the plurality of candidate preparation sites. When receiving a signal indicating that it is possible to perform the preparation work from the first computer, the controller **180** may determine the first candidate preparation site as the preparation site. By contrast, when not receiving a response indicating that it is possible to perform the preparation work from the first computer, the controller 180 may transmit a signal requesting performance of the preparation work to a second computer at a second candidate preparation site selected from the plurality of candidate preparation sites. In this case, when receiving a response indicating that it is possible to perform the preparation work from the second computer, the controller **180** can determine the second candidate preparation site as the preparation site. When not receiving a response indicating that it is possible to perform the preparation work from the second computer either, the controller **180** may transmit substantially the same signal to a computer at another candidate preparation site to inquire whether it is possible to perform the preparation work or not, or may return the work vehicle **100** to the repository **90** without determining the preparation site.

In the above-described embodiment, the controller **180** provided inside the work vehicle **100** performs all of the determination on the preparation site, the generation of a path for the work vehicle **100,** and the travel control. Instead, a part of the operation of the controller **180** may be executed by the processor **660** of the management device **600.** For example, the processor **660** may determine the preparation site and generate a path. In this case, the controller **180** may be configured or programmed to control self-driving of the work vehicle **100** based on the information on the preparation sites and the path transmitted from the management device **600.**

The controller **180** may determine whether the preparation work is necessary or not based on an output of one or more sensors while the work vehicle **100** is performing agricultural work in one field. Upon determination that the preparation work is necessary during the agricultural work, the controller **180** may cause the work vehicle **100** to suspend the agricultural work and move the work vehicle **100** to the preparation site. Alternatively, the controller **180** may move the work vehicle **100** to the preparation site after the agricultural work in the field is finished or after all the tasks of agricultural work for the day are finished. In this case, the controller **180** may transmit a notice to the first terminal device **400** at the time when determining that the preparation work is necessary and thus notify the user that the work vehicle **100** is to return to the repository after the agricultural work in the field is finished or all the tasks of agricultural work for the day are finished and then the preparation work is performed at the preparation site.

### (Preferred Embodiment 2)

Now, illustrative embodiment 2 according to the present disclosure will be described. Hereinafter, differences from embodiment 1 will be mainly described, and overlapping descriptions will be omitted.

A control system for an agricultural machine performing self-driving according to illustrative embodiment 2 of the present disclosure includes a storage device and a controller. The storage device stores a schedule of agricultural work to be performed by the agricultural machine. The controller controls an operation of the agricultural machine according to the schedule. After a specific task of agricultural work included in the schedule is finished, the controller moves the agricultural machine to a waiting area different from a previously-set repository for the agricultural machine, based on the next task of agricultural work included in the schedule.

According to the above-described configuration, the agricultural machine can be moved to a waiting area different from the repository for the agricultural machine, based on the next task of agricultural work included in the schedule. For example, the controller can move the agricultural machine to one of the repository or the waiting area, based on the position of a field where the next task of agricultural work is to be performed (hereinafter, such a field will be referred to also as a "next field"). As a result, after the agricultural work scheduled for one day is finished, in a case where, for example, the field where the next task of agricultural work scheduled for the next day or thereafter is to be performed is closer to the waiting area than to the repository, the agricultural machine can be moved to the waiting area. Alternatively, the controller may move the agricultural machine to one of the repository or the waiting area based on the point of time (or date/time) when the next task of agricultural work is scheduled to be begun. For example, in a case where there is a relatively long interval (e.g., 6 hours or longer) after one task of agricultural work in one field is completed until a point of time when the next task of agricultural work is scheduled to be begun, the controller may return the agricultural machine to the repository. Whereas in a case where such an interval is relatively short (e.g., 2 hours or longer and shorter than 6 hours), the controller may move the agricultural machine to a waiting area relatively close to the next field. In a case where the interval until the next task of agricultural work is short and thus the agricultural machine does not need to wait, the controller may move the agricultural machine directly to the next field. As a result of the above-described operation, the controller can move the agricultural machine to the waiting area in accordance with the agricultural work scheduled to be performed next, and move the agricultural machine from the waiting area to the field in accordance with the point of time when the next task of agricultural work is scheduled to be begun. This can reduce the time period necessary to perform the move and the amount of consumption of fuel as compared with a case where the agricultural machine is first returned to the repository and then moved to the next field. As a result, a series of tasks of agricultural work using the agricultural machine can be performed more efficiently.

A "schedule of agricultural work" is data defining a plan of one or more tasks of agricultural work to be performed by an agricultural machine. For example, the schedule of agricultural work includes, for each task of agricultural work to be performed by the agricultural machine, information indicating the time/date and the field when and where the agricultural work is to be performed. The schedule may also include, for each task of agricultural work, information on the contents of the work, the implement to be used, and/or the types and amounts of supplies to be used. As used herein, "supplies" refers to goods used for agricultural work performed by an agricultural machine. The supplies are also referred to as "agricultural supplies". The supplies may include goods consumed by the agricultural work, for example, agricultural chemicals, fertilizers, seeds, or seedlings. The schedule for agricultural work may be created by a management device communicating with the agricultural machine and thus managing the agricultural machine. The management device can create a schedule based on, for example, information input by the user (agricultural business executive, agricultural worker, etc.) manipulating a terminal device. The management device may manage agricultural work of a plurality agricultural machines. In this case, the schedule may include information on agricultural work to be performed by the plurality of agricultural machines. The schedule may be downloaded onto the agricultural machines and stored in a storage device in each of the agricultural machines.

A "repository" is a site provided to keep the agricultural machine. The repository may be, for example, a site managed by the user of the agricultural machine. The repository may be a site saved to keep the agricultural machine, for example, a warehouse, a barn or a parking area at a house or an office of the user. The position of the repository may be previously registered and stored in a storage device.

A "waiting area" is a site provided for the agricultural machine to wait temporarily. One or more waiting areas are provided in an environment where the agricultural machine performs self-driving. In this specification, the waiting area may be referred to as a "station". The waiting area may be, for example, managed or used jointly by a plurality of users (agricultural workers, etc.). The waiting area may be, for example, a warehouse, a garage, a barn, a parking area, or any other facilities. The waiting area may be a warehouse, a barn, a garage or a parking area at a house or an office of an agricultural worker different from the user of the agricultural machine. A plurality of waiting areas may be scattered in the environment where the agricultural machine moves. In this case, the controller may move the agricultural machine to one waiting area selected from the plurality of waiting areas. In the waiting area, work such as replacement or maintenance of a part or an implement of the agricultural machine or replenishment of supplies may be performed. In this case, parts, tools or supplies necessary to perform the work may be provided in the waiting area.

The controller may move the agricultural machine to the waiting area based on the positional relationship between the repository, a first field where a specific task of agricultural work was performed, a second field where the next task of agricultural work is to be performed, and the waiting area. For example, the controller may determine whether to move the agricultural machine to the repository or to the waiting area based on the positional relationship between the repository, the first field, the second field and the waiting area. In a case where, for example, a first moving distance, by which the agricultural machine moves from the first field via the repository to a field where the next task of agricultural work is to be performed, is longer than a second moving distance, by which the agricultural machine moves from the first field via the waiting area to the field where the next task of agricultural work is to be performed, the controller may move the agricultural machine to the waiting area. By contrast, in a case where the second moving distance is longer than the first moving distance, the controller may move the agricultural machine to the repository. Such an operation allows the agricultural machine to move to either the repository or the waiting area to which the agricultural machine can move by the shorter distance. Therefore, the moving time period can be shortened, and the amount of consumption of fuel can be decreased.

In a case where a time period after a specific task of agricultural work is finished until the next task of agricultural work is to be begun is equal to, or longer than, a predetermined time period (e.g., 2 hours, 4 hours, etc.), the controller may move the agricultural machine to the waiting area. By contrast, in a case where the above-mentioned time period is shorter than the predetermined time period, the controller may move the agricultural machine directly to the field where the next task of agricultural work is to be performed. The predetermined time period is not fixed to any length, and may be changed in accordance with, for example, the positional relationship between the first field where the specific task of agricultural work was performed, the second field where the next task of agricultural work is to be performed, and the waiting area. For example, the longer the distance between the first field and the second field is, the longer the predetermined time period may be set. The predetermined time period may be automatically determined by the controller or may be set based on an input made by the user.

The controller can move the agricultural machine to the field where agricultural work is scheduled at a point of time when the agricultural work is scheduled according to the schedule recorded in the storage device, so that the agricultural machine performs the agricultural work. The schedule may include information on a plurality of tasks of agricultural work to be performed in a plurality of fields. In this case, when the agricultural work is finished in one field, the controller moves the agricultural machine for the agricultural work to be scheduled to be performed next. At this point, the controller may move the agricultural machine to either the repository, the waiting area, or the next field in accordance with the time difference between the point of time when the agricultural work in one field is finished and the point of time when the agricultural work in the next field is to be begun (the time difference is also referred to as an "interval"). In a case where, for example, the time difference is relatively short, the controller may move the agricultural machine directly to the next field. In a case where the time difference is relatively long, the controller may move the agricultural machine to one of the repository or the waiting area. In a case where, for example, all the tasks of agricultural work scheduled for one day are finished and no task of agricultural work is to be performed until the next day or thereafter, the controller may move the agricultural machine to one of the repository or the waiting area. Alternatively, in a case where the interval between two tasks of agricultural work to be performed in two fields exceeds a threshold value (e.g., 2 hours, 4 hours, etc.), the controller may move the agricultural machine to one of the repository or the waiting area. In a case where, for example, the interval is in the range between a first time period (e.g., 2 hours) and a second time period (e.g., 6 hours), the controller may move the agricultural machine to the waiting area; whereas in a case where the interval is longer than the second time period, the controller may move the agricultural machine to the repository. The first time period and the second time period may be determined by the controller or the user in consideration of the moving time period of the agricultural machine that is varied in accordance with the positions of the two fields, the repository and the waiting area.

As described above, in a case where a specific condition is satisfied after the agricultural work in one field is finished, the controller may determine whether to move the agricultural machine to the repository or to the waiting area. The controller may make the above-described determination only after the final task of agricultural work among the tasks of agricultural work scheduled for one day is finished. Alternatively, the controller may make the above-described determination also in the middle of the tasks of agricultural work scheduled for one day. For example, in a case where the interval after one task of agricultural work is finished until the next task of agricultural work is to be begun is relatively long, the controller may make the above-described determination after the one task of agricultural work is finished. Even in a case where the agricultural machine needs to wait because of an unexpected event such as a quick change of the weather or trouble of equipment, the controller may move the agricultural machine to the waiting area close to the field where the next task of agricultural work is to be performed so that the agricultural machine can wait in the waiting area.

The schedule may include information on a plurality of tasks of agricultural work to be performed over a plurality of working days by one or more agricultural machines managed by the user. In this case, for example, the storage device stores, as the schedule, information on a plurality of tasks of agricultural work including the final task of agricultural work to be performed on each working day as the above-mentioned specific task of agricultural work and the first task of agricultural work to be performed on each working day as the above-mentioned next task of agricultural work. In this case, on each working day, the controller may move the agricultural machine to the waiting area or the repository based on, for example, the position of the field where the next task of agricultural work is to be performed after the final task of agricultural work is finished.

The control system may further include an input device by which the repository and the waiting area are input to the controller. The input device may allow a plurality of repositories and/or a plurality of waiting areas to be input thereto. The input device may be mounted on, for example, a terminal device used by the user. The user can manipulate the input device to input the repository and the waiting area.

The storage device may store map data on the environment where the agricultural machine travels (environment map). The environment map may include positional information on, for example, one or more fields where the agricultural machine performs agricultural work, the repository for the agricultural machine, and one or more waiting areas. The controller can generate a path along which the agricultural machine is to move (target path) based on the environment map and positional information on the agricultural machine. The positional information on the agricultural machine may be generated based on, for example, data output from a GNSS receiver mounted on the agricultural machine. The management device connected to the controller via a network may generate a target path. In this case, the management device transmits information indicating the generated target path to the controller. The controller controls a drive device of the agricultural machine so that the agricultural machine moves along the target path. As a result, the controller can move the agricultural machine toward a desired destination such as the field, the repository or the waiting area.

When moving the agricultural machine to the waiting area, the controller may transmit a notice to the terminal device used by the user of the agricultural machine. The notice may include, for example, information specifying the waiting area to which the agricultural machine is to move. Receipt of such a notice allows the user to learn that the agricultural machine is not to return to the repository but is to move to the waiting area. The user may be, for example, an owner of the agricultural machine or a worker usually using the agricultural machine. The terminal device may be any computer such as, for example, a smartphone, a table computer or a personal computer (PC). In a case of moving the agricultural machine to the waiting area and then determining the next date/time when the agricultural machine is to be returned to the repository, the controller may notify the terminal device of information indicating the date/time. This allow the user to learn the date/time when the agricultural machine is to return to the repository.

An agriculture management system according to another embodiment of the present disclosure includes a management device and an agricultural machine. The management device manages a schedule of agricultural work. The agricultural machine includes a controller to control self-driving and a communication device to receive the schedule from the management device. After a specific task of agricultural work included in the schedule received by the communication device is finished, the controller moves the agricultural machine to a waiting area different from a previously-set repository for the agricultural machine, based on the next task of agricultural work included in the schedule.

According to the above-described configuration, like in the embodiment described above, the controller can move the agricultural machine to the waiting area different from the repository, to which the agricultural machine is originally supposed to return, based on the next task of agricultural work. Therefore, the moving time period of the agricultural machine and the amount of consumption of fuel can be reduced, and a series of tasks of agricultural work included in the schedule can be performed efficiently.

The management device may instruct the controller of the agricultural machine to perform agricultural work based on, for example, the schedule of the agricultural work stored in the storage device included in the agriculture management system. The controller can move the agricultural machine to a field according to the instruction from the management device, and cause the agricultural machine to perform the agricultural work in the field.

The communication device can receive, as the schedule, a schedule including information indicating a field where a specific task of agricultural work was performed and information indicating a field where the next task of agricultural work is to be performed. The controller may move the agricultural machine to the waiting area based on the positional relationship between the repository, the field where the specific task of agricultural work was performed, and the field where the next task of agricultural work is to be performed, and the waiting area.

In a case where a first moving distance, by which the agricultural machine moves from the field where the specific task of agricultural work was performed, via the repository, to the field where the next task of agricultural work is to be performed is longer than a second moving distance, by which the agricultural machine moves from the field where the specific task of agricultural work was performed, via the waiting area, to the field where the next task of agricultural work is to be performed, the controller may move the agricultural machine to the waiting area. In a case where the second moving distance is longer than the first moving distance, the controller may move the agricultural machine to the repository.

The communication device may receive, as the schedule, a schedule including information on the point of time when the next task of agricultural work is to be begun. In a case where the time difference between the point of time when the specific task of agricultural work was finished and the point of time when the next task of agricultural work is to be begun is equal to, or longer than, a predetermined time period, the controller may move the agricultural machine to the waiting area.

A method for controlling an agricultural machine performing self-driving according to still another embodiment of the present disclosure includes: acquiring a schedule of agricultural work to be performed by the agricultural machine from a storage device; and controlling an operation of the agricultural machine according to the schedule. "Controlling the operation of the agricultural machine" includes moving the agricultural machine to a waiting area different from a previously-set repository for the agricultural machine, after a specific task of agricultural work included in the schedule is finished, based on the next task of agricultural work included in the schedule.

A computer program to control an agricultural machine performing self-driving according to still another embodiment of the present disclosure causes a computer to: acquire a schedule of agricultural work to be performed by the agricultural machine from a storage device; and control an operation of the agricultural machine according to the schedule. "Controlling the operation of the agricultural machine" includes moving the agricultural machine to a waiting area different from a previously-set repository for the agricultural machine, after a specific task of agricultural work included in the schedule is finished, based on the next task of agricultural work included in the schedule.

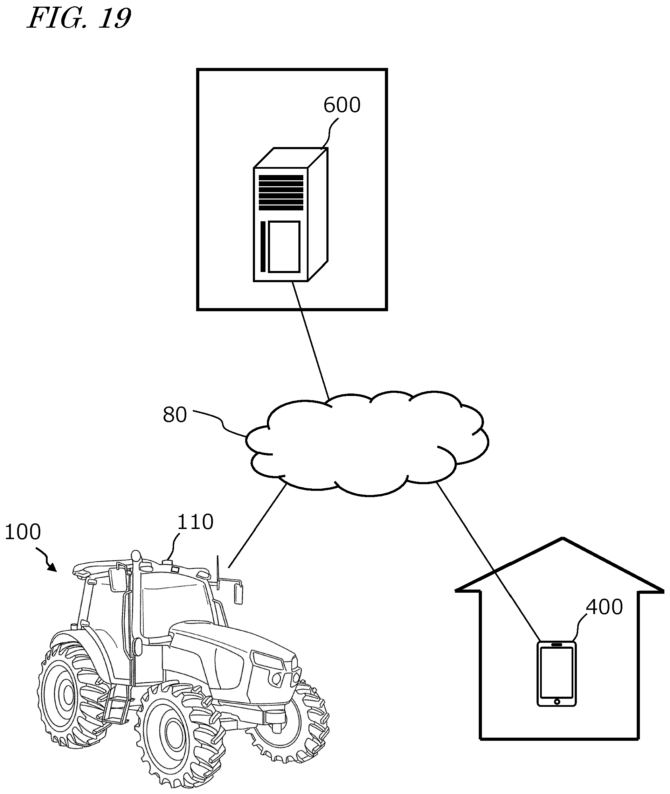

FIG. **19** is a diagram providing an overview of an agriculture management system according to the present embodiment. The agriculture management system shown in FIG. **19** includes the work vehicle **100,** a terminal device **400** and the management device **600.** The configuration shown in FIG. **19** is substantially the same as the configuration shown in FIG. **1** with the second terminal device **500** being excluded. The terminal device **400** corresponds to the first terminal device **400** in the example of FIG. **1****.** The terminal device **400** is a computer used by a user performing remote monitoring of the work vehicle **100.** The management device **600** is a computer managed by a business operator managing the agriculture management system. The work vehicle **100,** the terminal device **400** and the management device **600** can communicate with each other via the network **80.** FIG. **19** shows one work vehicle **100,** but the agriculture management system may include a plurality of the work vehicles **100** or any other agricultural machine. The work vehicle **100,** the terminal device **400** and the management device **600** respectively have substantially the same configurations as those of the corresponding component elements in the example of FIG. **1****.**

In the present embodiment, the terminal device **400** may include an input device allowing positional information on a repository for the work vehicle **100** and one or more waiting areas to be input thereto.

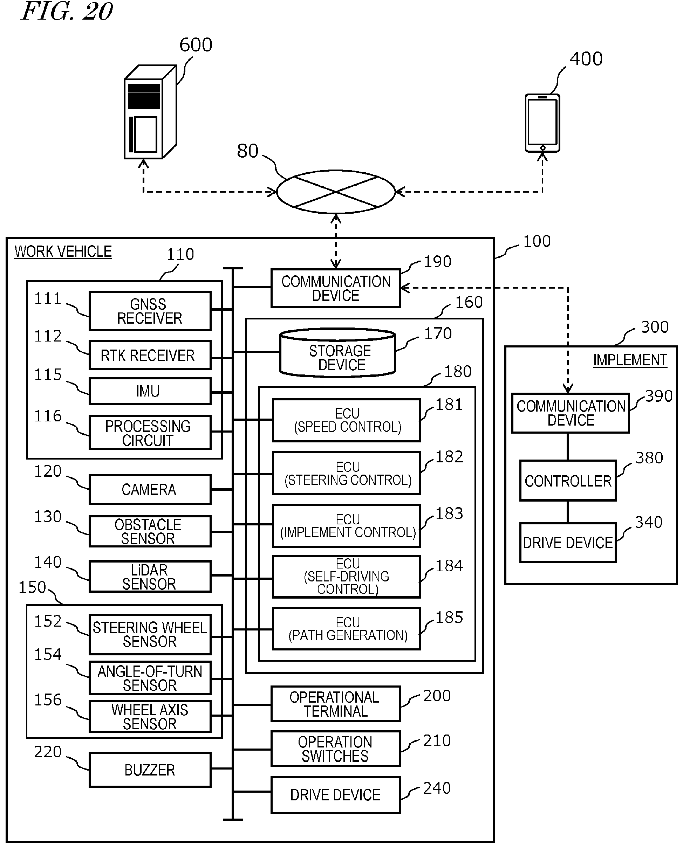

FIG. **20** is a block diagram showing an example configuration of the work vehicle **100** and the implement **300** in the present embodiment. The configuration shown in FIG. **20** is substantially the same as the configuration shown in FIG. **3** except that the second terminal device **500** and the ECU **186** in the controller **180** are excluded from the configuration in FIG. **20****.**

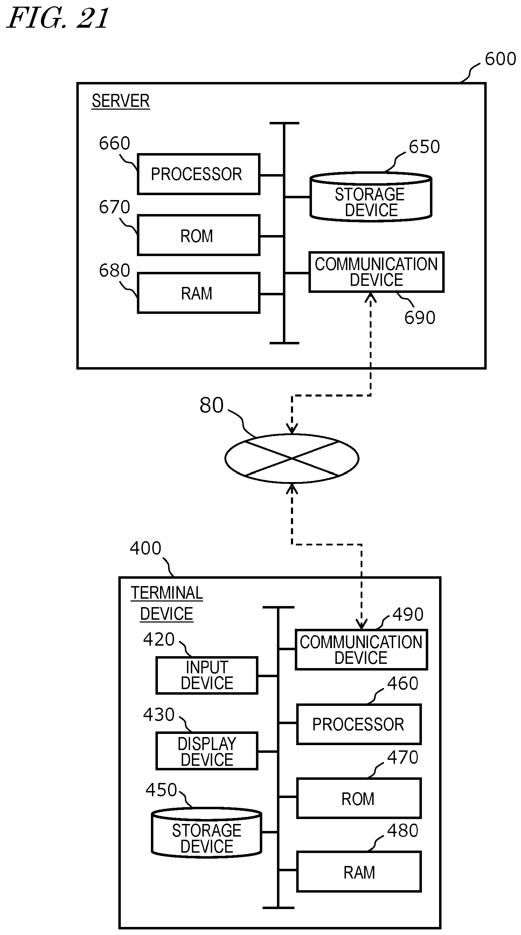

FIG. **21** is a block diagram showing an example of schematic hardware configuration of the management device **600** and the terminal device **400.** The configuration shown in FIG. **21** is substantially the same as the configuration of the management device **600** and the first terminal device **400** shown in FIG. **7****.**

### [Move to the repository and the waiting area]

Now, an example of control of moving the work vehicle 100 performed after the work vehicle **100** completes a specific task of agricultural work will be described.

The work vehicle **100** performs agricultural work in one or more fields a day. Which task of agricultural work is to be performed in which field at which date/time by the work vehicle **100** is determined according to a schedule. The controller **180** controls the drive device **240** so that the work vehicle **100** performs agricultural work at a specified field **70** at a specified points of time according to the schedule.

In the present embodiment, after a specific task of agricultural work included in the schedule is finished, the controller **180** moves the work vehicle **100** to a waiting area different from a previously-set repository, based on the next task of agricultural work included in the schedule. More specifically, after the specific task of agricultural work included in the schedule is finished, the controller **180** moves the work vehicle **100** to one destination selected from the repository and one or more waiting areas, based on the positional relationship between the field where the specific task of agricultural work was performed, the field where the next task of agricultural work is to be performed, the repository, and the one or more waiting areas. The positional information on the repository and the one or more waiting areas is registered based on a manipulation performed by the user previously by use of the input device **420** of the terminal device **400,** and is stored in the storage devices **650** and **170.**

Hereinafter, an example in which the "specific task of agricultural work" is the final task of agricultural work performed on each working day", and the "next task of agricultural work" is the first task of agricultural work performed on the next working day.

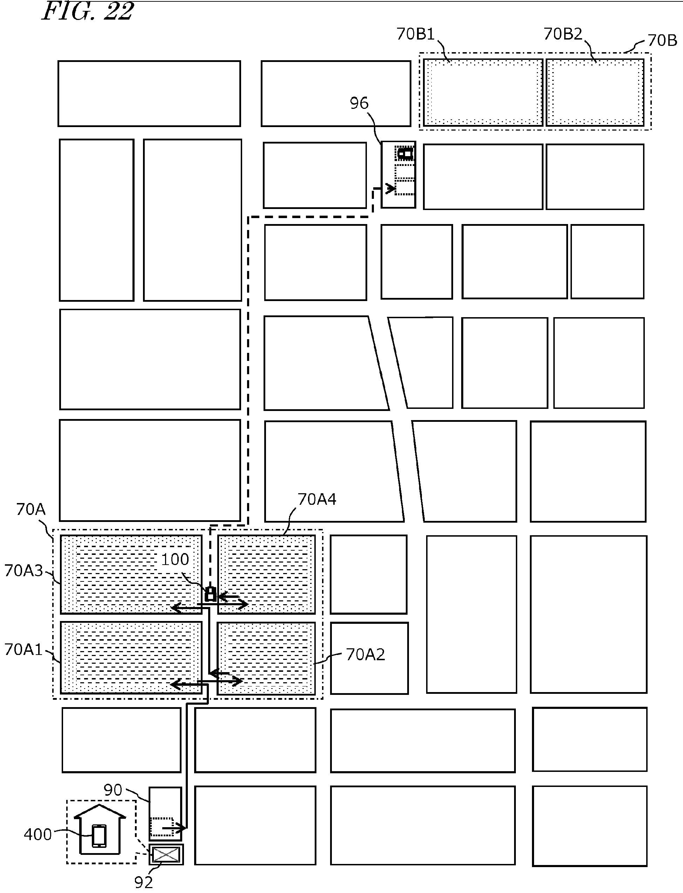

FIG. **22** is a diagram showing an operation by which the work vehicle **100,** after performing the agricultural work for one day, moves to a station **96** as a waiting area, for the agricultural work for the next working day. FIG. **22** shows, as an example, a plurality of fields **70A,** where the work vehicle **100** is to perform agricultural work on a certain working day, a plurality of fields **70B,** where the work vehicle **100** is to perform agricultural work on the next working day, the repository **90** for the work vehicle **100,** a house **92** of the user performing remote monitoring of the work vehicle **100,** and the station **96** where the work vehicle **100** is to wait. The station **96** is an example of waiting area. The fields **70A** include four fields **70A1, 70A2, 70A3** and **70A4.** The fields **70B** include two fields **70B1** and **70B2.** The number of the fields where the agricultural work is to be performed on one working day may be set optionally. The positions of the fields **70A.** the fields **70B,** the repository **90** and the station **96** are recorded in the storage device **170** previously together with data on the environment map.

The repository **90** may be, for example, a warehouse, a barn or a parking area adjacent to the house **92** or an office of the user. The station **96** may be managed or used jointly by a plurality of users. The station **96** may be a facility such as a parking area or a garage managed by a regional government of a city, a town or a village, an agricultural cooperative or a corporation. In a case where the station **96** is a facility locked at nighttime, the work vehicle **100** in the station **96** can be prevented from being robbed. FIG. **22** shows one station **96** as an example, but a plurality of stations (i.e., waiting areas) may be provided. In the station **96,** a service such as replacement or maintenance of a part of the work vehicle 100 or the implement **300** or replenishment of supplies (agricultural chemicals, fertilizers, seedlings, seeds, etc.) may be provided. The station **96** may be provided for a charge. In this case, the management device **600** may charge the user in accordance with the records of use of the station **96** by the work vehicle **100.** In the example of FIG. **22****,** the station **96** is close to the fields **70B.** Alternatively, the station **96** may be provided far from the fields **70B.** In the example of FIG. **22****,** the fields **70A,** the fields **70B,** the repository **90** and the station **96** are relatively close to each other. This is merely an example. The fields **70A,** the fields **70B,** the repository **90** and the station **96** may be separated from each other by a longer distance, for example, a distance of 1 km to 10 km, or longer.

FIG. **22** shows a path along which the work vehicle **100** is to travel, by arrow lines. The solid arrow lines represent an example of path of the work vehicle **100** from when the work vehicle **100** departs from the repository **90** until the work vehicle **100** finishes the agricultural work for one day. The broken arrow line represents an example of path of the work vehicle **100** after the work vehicle **100** finishes the agricultural work for one day until the work vehicle **100** moves to the station **96.** In this example, the work vehicle **100** departs from the repository **90,** sequentially visits the plurality of fields **70A,** where the agricultural work is scheduled to be performed for the day, to perform the agricultural work shown in the schedule in each of the fields **70A.** In each field **70A,** the work vehicle **100** performs the agricultural work while automatically traveling by, for example, the method described above with reference to FIG. **8****.** When the agricultural work is finished in one field **70A,** the work vehicle **100** enters the next field **70A,** and performs the agricultural work in substantially the same manner. The work vehicle **100** performs the agricultural work in this manner. When the final task of agricultural work scheduled for the day is finished in the field **70A4,** the controller **180** of the work vehicle **100** determines whether to return the work vehicle **100** to the repository **90** or to move the work vehicle **100** to the station **96.** This determination is made by the ECU **185** in the controller **180.**

The controller **180** determines whether to move the work vehicle **100** to the repository **90** or to the station **96** based on, for example, the positional relationship between the repository **90,** the field **70A4,** where the final task of agricultural work for the day was performed, the field **70B1,** where the first task of agricultural work is to be performed on the next working day, and the station **96.** In a case where, for example, a first moving distance, by which the work vehicle **100** moves from the field **70A4** via the repository **90** to the field **70B1,** where the next task of agricultural work is to be performed, is longer than a second moving distance, by which the work vehicle **100** moves from the field **70A4** via the station **96** to the field **70B1,** the controller **180** moves the work vehicle **100** to the station **96.** By contrast, in a case where the second moving distance is longer than the first moving distance, the controller **180** moves the work vehicle **100** to the repository **90.** The controller **180** The controller **180** calculates the first moving distance and the second moving distance based on the environment map stored in the storage device **170.** For example, the controller **180** calculates, as the first moving distance, the distance of the shortest path from the field **70A4** via the repository **90** to the field **70B1,** where the next task of agricultural work is to be performed. Similarly, the controller **180** calculates, as the second moving distance, the distance of the shortest path from the field **70A4** via the station **96** to the field **70B1,** where the next task of agricultural work is to be performed. The controller **180** compares the first moving distance and the second moving distance to each other. In a case where the first moving distance is shorter, the controller **180** returns the work vehicle **100** to the repository **90.** In a case where the second moving distance is shorter, the controller **180** moves the work vehicle **100** to the station **96.** Such an operation can reduce the time period necessary to move the work vehicle **100** and the amount of consumption of fuel. Therefore, a series of tasks of agricultural work can be performed efficiently.

While moving, the work vehicle **100** travels while detecting an obstacle such as a pedestrian or another vehicle by use of the obstacle sensors **130,** the LiDAR sensor **140** and the cameras **120** and controlling the steering and speed so as to avoid the obstacle. The work vehicle **100** recognizes traffic lights based on, for example, images captured by the cameras **120,** and stops at a red light and moves forward at a green light.

In the present embodiment, the controller **180** determines whether to move the work vehicle **100** to the repository **90** or to the station **96** when the agricultural work in the field **70A4** is finished. Alternatively, the controller **180** may make the determination at any other timing. In the present embodiment, the field where the final task of agricultural work for one day is to be performed is fixed for each working day. Therefore, the above-mentioned determination can be made, for example, when the work vehicle 100 departs from the repository **90,** while the work vehicle **100** is performing the agricultural work in either one of the fields **70A,** or while the work vehicle **100** is traveling on the road. However, there may be a case where the agricultural work does not proceed as scheduled due to an influence of quick change in the weather or the like. In this case, the first task of agricultural work to be performed on the next working day may possibly be changed from the initial schedule. The controller **180** may determine whether to return the work vehicle **100** to return to the repository **90** or to move the work vehicle **100** to the station **96** at the time when the final task of agricultural work is finished on each working day as in the above-described example, so that the operation can deal with such an unexpected change in the schedule flexibly.

When moving the work vehicle **100** to the station **96,** the controller **180** may transmit a notice to the terminal device **400** used by the user in the house **92** or at any other place. This notice may include information identifying the station **96,** for example, the name or the position thereof. The notice may be transmitted from the work vehicle **100** to the terminal device **400** directly or via the management device **600.** Receipt of such a notice allows the user to learn that the work vehicle **100** is not to return to the repository **90** but is to wait at the station **96.**

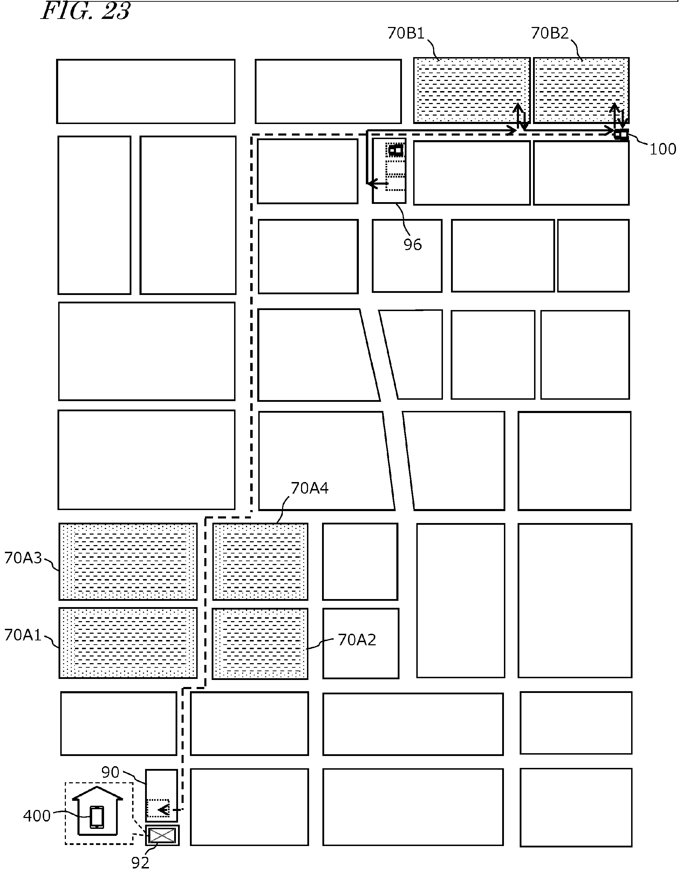

After arriving at the station **96,** the work vehicle **100** waits at the station **96** until the next working day. On the next working day, as shown in FIG. **23****,** the work vehicle **100** departs from the station **96,** sequentially visits the fields **70B1** and **70B2,** where the agricultural work is scheduled for this working day, to perform the agricultural work. When the final task of agricultural work scheduled for this working day is finished, the controller **180** determines whether to move the work vehicle **100** to the station **96** or to return the work vehicle **100** to the repository **90** based on the position of the field where the first task of agricultural work is scheduled for the next working day as described above. FIG. **23** shows an example of path for the work vehicle **100** returning to the repository **90.** Such a path may be adopted in a case where the field where the first task of agricultural work scheduled for the next working day is closer to the repository **90** than to the station **96.** In a case of returning the work vehicle **100** to the repository **90** as in this example, the controller **180** may transmit a notice to the terminal device **400.** This notice may include information indicating the point of time when the work vehicle **100** is scheduled to return to the repository **90.** This allows the user to learn that the work vehicle **100** is to return to the repository **90.** In a case where a plurality of waiting areas are set, the controller **180** may determine a destination at which the work vehicle **100** can arrive by the shortest distance from the plurality of waiting areas and the repository **90,** and move the work vehicle **100** to the destination. After this, substantially the same operation is repeated until the agricultural work included in the schedule for all the working days is finished.

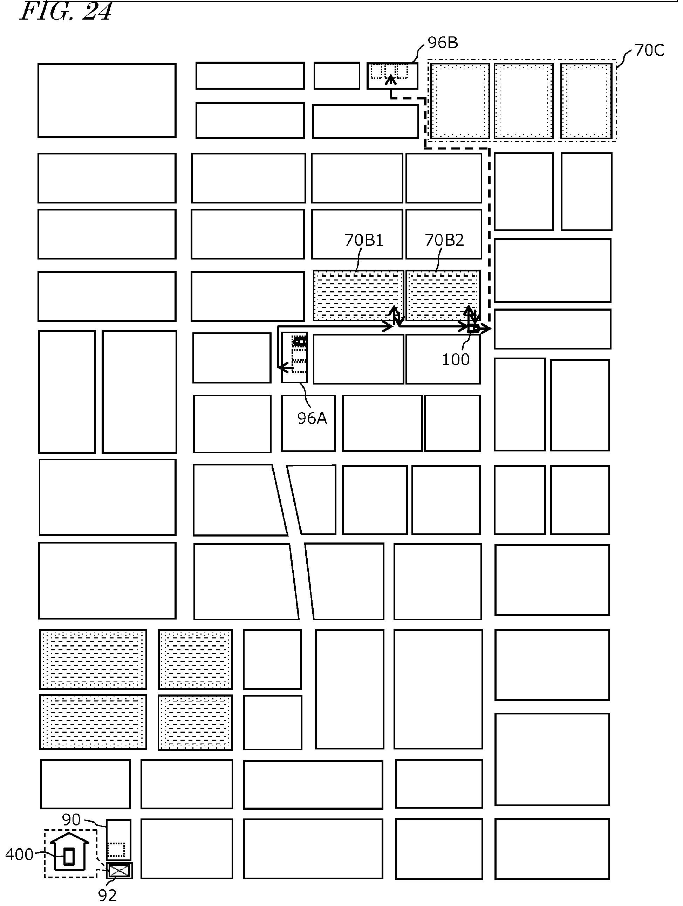

FIG. **24** is a diagram showing an example in which there are a plurality of the stations **96 (96A** and **96B)** in the environment where the work vehicle **100** travels. In this example, after the agricultural work is finished in the field **70B2,** the controller **180** selects one site from the repository **90,** the station **96A** and the station **96B.** In the example of FIG. **24****,** the station **96B** is close to the field **70C,** where the agricultural work is scheduled for the next working day. In this case, the moving distance can be minimized by moving the work vehicle **100** to the station **96B.** Therefore, the controller **180** moves the work vehicle **100** to station **96B.**

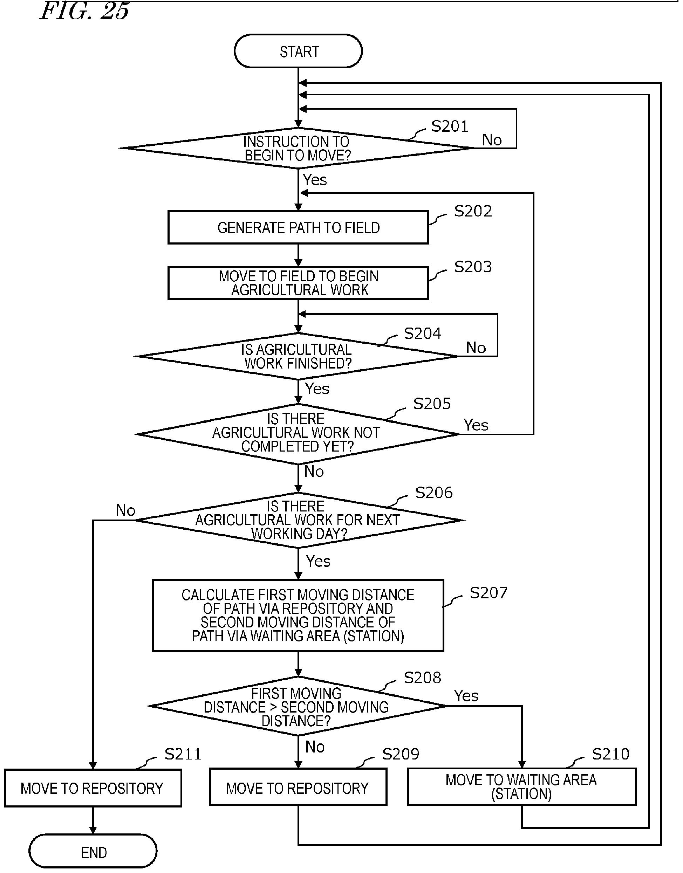

Now, an example operation of the controller **180** will be described in more detail with reference to FIG. **25****.**

FIG. **25** is a flowchart showing an example of control method executed by the controller **180.** In this example, the work vehicle **100** is on a stop at the repository **90** until beginning to move for agricultural work. In this state, the controller **180** waits for an instruction to begin to move from the management device **600** (step **S201).** The processor **660** of the management device **600** instructs the work vehicle **100** to begin to move when a point of time to begin the first task of agricultural work for one day approaches, according to the schedule stored in the storage device **650.**

Upon receipt of the instruction to begin to move, the controller **180** generates a path to the field where the first task of agricultural work for the day is to be performed (step **S202).** The controller **180** moves the work vehicle **100** to the field along the path, so that the work vehicle **100** begins the agricultural work (step **S203).** In the field, the controller **180** controls the work vehicle **100** in, for example, the method described above with reference to FIG. **8** so that the work vehicle **100** performs the tasked travel. When the agricultural work is finished (Yes in step **S204),** the controller **180** refers to the schedule to determine whether or not there is still a task of agricultural work not completed yet among the tasks of agricultural work scheduled for the day (step **S205).** In a case where there is still a task of agricultural work not completed yet, the operation returns to step **S202,** and the controller **180** generates a path to the next field and moves the work vehicle **100** to the field. The controller **180** repeats the operation of step **S202 to S205** until the final task of agricultural work scheduled for the working day is completed.

When the final task of agricultural work scheduled for the working day is completed, the controller **180** refers to the schedule to determine whether or not there is agricultural work for the next working day (step **S206).** In a case where there is agricultural work for the next working day, the controller **180** calculates the shortest moving distance for the case where the work vehicle **100** moves to the field where the first task of agricultural work is to be performed on the next working day via the repository **90** (first moving distance) and the shortest moving distance for the case where the work vehicle **100** moves to the same field via the station **96** (second moving distance) (step **S207).** In a case where a plurality of stations (waiting areas) are provided, the distance calculated with the station with which the moving distance is shortest is set as the second moving distance. The controller **180** compares the first moving distance and the second moving distance to each other (step **S208).** In a case where the first moving distance is shorter than the second moving distance, the controller **180** generates a path to the repository **90,** and moves the work vehicle **100** to the repository **90** along the path (step **209**). By contrast, in a case where the first moving distance is longer than the second moving distance, the controller **180** generates a path to the station **96,** and moves the work vehicle **100** to the station **96** along the path (step **S210).** After steps **S209** and **S210,** the operation returns to step **S201.** The controller **180** executes the above-described operation on the next working day. The controller **180** executes the above-described operation on each working day until it is determined in step **S206** that there is no task of agricultural work for the next working day.

When it is determined in step **S206** that there is no task of agricultural work for the next working day, the controller **180** generates a path from the position of the work vehicle **100** at that moment to the repository **90,** and cause the work vehicle **100** travel along the path. In this manner, the controller **180** returns the work vehicle **100** to the repository **90.**

The above-described operation can shorten the distance by which the work vehicle **100** moves for the agricultural work performed in a plurality of fields over a plurality of working days and reduce the moving time period and the amount of consumption of fuel. Therefore, a series of tasks of agricultural work can be performed more efficiently. According to the present embodiment, the controller **180** of the work vehicle **100** automatically executes the above-described operation without the user instructing the work vehicle **100.** Therefore, the user does not need to spend extra time or perform extra work.

### (Modification of embodiment 2)

The configuration and operation of embodiment 2 described above are merely an example, and the present disclosure is not limited to the above-described configuration and operation. Hereinafter, a modification of embodiment 2 will be described.

In embodiment 2 described above, the controller **180** determines whether to return the work vehicle **100** to the repository or to move the work vehicle **100** to the waiting area after the final task of agricultural work is finished on each working day. The controller **180** is not limited to executing such an operation, and may determine whether to move the work vehicle **100** to the next field, to the repository or to the waiting area, each time one task of agricultural work is finished, for example. For example, referring to FIG. **22****,** a case will be discussed where agricultural work in the plurality of fields **70A** and agricultural work in the plurality of fields **70B** are to be performed on the same day by the work vehicle **100.** In this case, the controller **180** may determine the destination based on the time difference between the point of time when agricultural work in each field was finished and the point of time when the next task of agricultural work is schedule to be performed. For example, the controller **180** may determine whether the above-mentioned time difference is longer than a threshold value or not each time the agricultural work in the field is finished, and determine the destination based on the results of the determination. In a case where the time difference is equal to or shorter than the threshold value, the controller **180** moves the work vehicle **100** to the next field directly. By contrast, in a case where the time difference is longer than the threshold value, the controller **180** may execute substantially the same process as in steps **S207** and **S208** shown in FIG. **25** to determine whether to move the work vehicle **100** to the repository or to the waiting area. A value appropriate as the threshold value varies in accordance with the positional relationship between the field where the agricultural work was finished, the field where the next task of agricultural work is to be performed, the repository and the waiting area. Therefore, the controller **180** may determine the threshold value in accordance with the positional relationship.

The controller **180** may calculate, each time one task of agricultural work is finished, the shortest estimated moving distance from the field where the agricultural work was finished to the next field, and determine the destination based on the results of the calculation. In a case where, for example, the calculated moving distance is equal or shorter than the threshold value (e.g., 100 m, 500 m, 1 km, etc.), the controller **180** may move the work vehicle **100** to the next field directly. By contrast, in a case where the calculated moving distance is longer than the threshold value, the controller **180** may determine whether to move the work vehicle **100** to the next field directly, to return the work vehicle **100** to the repository, or to move the work vehicle **100** to the waiting area in accordance with the time period until the point of time when the next task of agricultural work is to be begun.

Where a plurality of fields located relatively close to each other is set as a field group, the controller **180** may determine whether to move the work vehicle **100** to the next field directly, to return the work vehicle **100** to the repository, or to move the work vehicle **100** to the waiting area each time the agricultural work in each of the field groups is finished on each working day. A reason for this is that the fields belonging to the same field group are close to each other, and therefore, often times, it is not necessary to move the work vehicle **100** to the repository or the waiting area between the tasks of agricultural work to be performed in these fields. A case may occur where while agricultural work is performed in the plurality of fields belonging to the same field group, the implement needs to be replaced or the supplies need to be supplemented, for example. In this case, the controller **180** may move the work vehicle **100** to the repository or the waiting area for the replacement of the implement or the supplement of the supplies.

In the embodiment shown in FIG. **25****,** in a case where the second moving distance is shorter than the first moving distance, the controller **180** moves the work vehicle **100** to the station **96.** Instead of executing such an operation, the controller **180** may move the work vehicle **100** to the station **96** in a case where a specific task of agricultural work (e.g., the final task of agricultural work to be performed on a certain working day) and the next task of agricultural work (e.g., the first task of agricultural work to be performed on the next working day) are the same as each other and the second moving distance is shorter than the first moving distance. In a case where the specific task of agricultural work and the next task of agricultural work are different from each other, the controller **180** may move the work vehicle **100** to the repository **90** regardless of which of the first moving distance and the second moving distance is shorter. A "case where the specific task of agricultural work and the next task of agricultural work are different from each other" refers to a case where the contents of the tasks of the agricultural work are different from each other. For example, the specific task of agricultural work is tilling and the next task of agricultural work is spraying of agricultural chemicals. In this case, the work vehicle **100** may possibly be required to return to the repository **90** for the work such as replacement of the implement. In a case where the specific task of agricultural work and the next task of agricultural work are different from each other, the above-described operation of returning the work vehicle **100** to the repository **90** allows a necessary task such as replacement of the implement to be performed at the repository **90.**

Alternatively, in a case where the specific task of agricultural work and the next task of agricultural work are the same as each other and a moving distance from the station **96** to the field where the next task of agricultural work is to be performed (third moving distance) is shorter than a moving distance from the field where the specific task of agricultural work was performed to the repository **90** (fourth moving distance), the controller **180** may move the work vehicle **100** to the station **96.**

In the above-described embodiment, the controller **180** disposed inside the work vehicle **100** performs all of the determination of the destination of the work vehicle **100,** the generation of a path for the work vehicle **100,** and the travel control. Instead of such a form, a part of the operation of the controller **180** may be executed by the processor **660** of the management device **600.** For example, the determination of the destination and the generation of the path may be executed by the processor **660.** In this case, the controller **180** may be configured or programmed to control self-driving of the work vehicle **100** based on information on the destination and the path transmitted from the management device **600.** The management device **600** may manage operations of a plurality of agricultural machines including the work vehicle **100.** In this case, the management device **600** may issue an instruction on operations to each of the agricultural machines based on the schedule of agricultural work to be performed by each of the agricultural machines.

A device performing self-driving control according to each of the above embodiments can be mounted on an agricultural machine lacking such functions as an add-on. Such a device may be manufactured and marketed independently from the agricultural machine. A computer program for use in such a device may also be manufactured and marketed independently from the agricultural machine. The computer program may be provided in a form stored in a non-transitory computer-readable storage medium, for example. The computer program may also be provided through downloading via telecommunication lines (e.g., the Internet).

### INDUSTRIAL APPLICABILITY

The techniques according to the present disclosure are applicable to management systems for agricultural machines, such as tractors, harvesters, rice transplanters, vehicles for crop management, vegetable transplanters, mowers, seeders, spreaders, or agricultural robots, for example.

### REFERENCE SIGNS LIST

**50:** GNSS satellites, **60:** reference station, **70:** field, **72:** work area, **74:** headland, **76:** road, **80:** network, **90:** repository, **92:** user's house, **94:** preparation site, **96:** station (waiting area), **100:** work vehicle, **101:** vehicle body, **102:** engine, **103:** transmission, **104:** tire, **105:** cabin **106:** steering device, **107:** driver's seat, **108:** linkage device, **110:** positioning device, **111:** GNSS receiver, **112:** RTK receiver, **115:** inertial measurement unit (IMU), **116** processing circuit, **120:** camera, **130:** obstacle sensor, **140:** LiDAR sensor, **150:** sensors, **152:** steering wheel sensor, **154:** angle-of-turn sensor, **156:** rotation sensor, **160:** control system, **170:** storage device, **180:** controller, **181, 182, 183, 184, 185, 186:** ECU, **190:** communication device, **200:** operational terminal, **210:** operation switches, **220:** buzzer, **232:** camera, **240:** drive device, **300:** implement, **340:** drive device, **380:** controller, **390:** communication device, **400:** first terminal device, **420:** input device, **430:** display device, **450:** storage device, **460:** processor, **470:** ROM, **480:** RAM, **490:** communication device, **500:** second terminal device, **520:** input device, **530:** display device, **550:** storage device, **560:** processor, **570:** ROM, **580:** RAM, **590:** communication device, **600:** management computer, **650:** storage device, **660:** processor, **670:** ROM, **680:** RAM, **690:** communication device

## Claims

1. A control system for an agricultural machine (100), the control system comprising:
a controller (180) configured to control self-driving of the agricultural machine (100); and
a storage device (170, 650) configured to store map data on an environment where the agricultural machine (100) moves and a schedule of agricultural work to be performed by the agricultural machine (100),
wherein the agricultural machine (100) includes one or more sensors (230, 232) configured to detect a state of attachment of an implement (300) to be attached to the agricultural machine (100), deterioration in the implement (300), deterioration in a part of the agricultural machine (100), or shortage of supplies,
**characterized in that**
the controller (180) is configured to:
control the agricultural machine (100) according to the schedule so that the agricultural machine (100) sequentially visits a plurality of fields where the agricultural work is scheduled for a day and performs tasks of the agricultural work included in the schedule in each of the plurality of fields;
after all tasks of the agricultural work in the plurality of fields scheduled for the day are completed, each time one task of agricultural work in each of the plurality of fields is finished, or before the agricultural work in the plurality of fields for the day is begun, determine whether preparation work, including at least one of replacement of the implement (300), maintenance of the implement (300), replacement of the part of the agricultural machine (100), maintenance of the part of the agricultural machine (100), or replenishment of the supplies, is necessary to perform a next task of the agricultural work; and
in a case where the preparation work is determined to be necessary, generate a target path, based on the map data, along a road extending to a preparation site outside the plurality of fields where the preparation work is to be performed, and move the agricultural machine (100) along the target path to the preparation site, before the agricultural work is performed.

2. The control system of claim 1, wherein the one or more sensors (230, 232) include at least one of an image sensor disposed so as to image the implement (300), the part of the agricultural machine (100) or the supplies, or a sensor to measure a remaining amount of the supplies.

3. The control system of claim 1 or 2, wherein in a case of moving the agricultural machine (100) to the preparation site, the controller (180) is configured to transmit a notice to a computer used by a worker performing the preparation work.

4. The control system of any one of claims 1 to 3, wherein after the preparation work is completed, the controller (180) is configured to move the agricultural machine (100) to a previously-set repository for the agricultural machine (100) or a field where a next task of agricultural work is scheduled to be performed.

5. The control system of any one of claims 1 to 4, wherein the controller (180) is configured to determine whether the preparation work is necessary or not for a next task of agricultural work, each time one task of agricultural work performed by the agricultural machine (100) is finished.

6. The control system of any one of claims 1 to 5, wherein the controller (180) is configured to:
determine whether the preparation work is necessary or not based on the signal output from the one or more sensors (230, 232) after agricultural work performed by the agricultural machine (100) for a day is finished;
in a case where the preparation work is not necessary, move the agricultural machine (100) to a previously-set repository for the agricultural machine (100); and
in a case where the preparation work is necessary, move the agricultural machine (100) to the preparation site, and after the preparation work is finished, moves the agricultural machine (100) to the repository.

7. The control system of any one of claims 1 to 5, wherein the controller (180) is configured to:
transmit a signal requesting performance of the preparation work to a computer at a candidate preparation site for the preparation site;
in a case of receiving a response indicating it is possible to perform the preparation work from the computer, determine the candidate preparation site as the preparation site; and
in a case of not receiving a response indicating it is possible to perform the preparation work from the computer, move the agricultural machine (100) to a previously-set repository for the agricultural machine (100) without determining the preparation site.

8. The control system of any one of claims 1 to 5, wherein the controller (180) is configured to:
transmit a signal requesting performance of the preparation work to a first computer at a first candidate preparation site selected from a plurality of candidate preparation sites;
in a case of receiving from the first computer, a response indicating it is possible to perform the preparation work, determine the first candidate preparation site as the preparation site;
in a case of not receiving from the first computer, a response indicating it is possible to perform the preparation work, transmit a signal requesting performance of the preparation work to a second computer at a second candidate preparation site selected from the plurality of candidate preparation sites; and
in a case of receiving from the second computer, a response indicating it is possible to perform the preparation work, determine the second candidate preparation site as the preparation site.

9. The control system of any one of claims 1 to 8, wherein when moving the agricultural machine (100) to the preparation site, the controller (180) is configured to transmit a notice including information, indicating the preparation site and contents of the preparation work, to a terminal device used by a user of the agricultural machine (100).

10. An agriculture management system, comprising:
an agricultural machine (100) including a controller (180) configured to control self-driving and one or more sensors (230, 232) configured to detect a state of attachment of an implement (300) to be attached to the agricultural machine (100), deterioration in the implement (300), deterioration in a part of the agricultural machine (100), or shortage of supplies;
a storage device (170, 650) configured to store map data on an environment where the agricultural machine (100) moves and a schedule of agricultural work to be performed by the agricultural machine (100); and
a management device configured to manage the agricultural machine (100),
**characterized in that**
the controller (180) is configured to:
based on an instruction from the management device, control the agricultural machine (100) according to the schedule so that the agricultural machine (100) sequentially visits a plurality of fields where the agricultural work is scheduled for a day and performs tasks of the agricultural work included in the schedule in each of the plurality of fields;
after all tasks of the agricultural work in the plurality of fields scheduled for the day are completed, each time one task of agricultural work in each of the plurality of fields is finished, or before the agricultural work in the plurality of fields for the day is begun, determine whether preparation work, including at least one of replacement of the implement (300), maintenance of the implement (300), replacement of the part of the agricultural machine (100), maintenance of the part of the agricultural machine (100), or replenishment of the supplies, is necessary to perform a next task of the agricultural work; and
in a case where the preparation work is determined to be necessary, generate a target path, based on the map data, along a road extending to a preparation site outside the plurality of fields where the preparation work is to be performed, and move the agricultural machine (100) along the target path to the preparation site, before the agricultural work is performed.

11. The agriculture management system of claim 10, wherein the controller (180) is configured to acquire information indicating contents of the agricultural work from the management device, and determine whether the preparation work is necessary or not based on the contents of the agricultural work and a state of the agricultural machine (100).

12. The agriculture management system of claim 11, wherein in a case where any of a state of attachment of the implement (300), a type of the supplies, or an amount of the supplies is not suitable for the contents of the agricultural work indicated by the information acquired from the management device, the controller (180) is configured to determine that the preparation work is necessary; and in a case where any of the state of attachment of the implement (300), the type of the supplies, or the amount of the supplies is suitable for the contents of the agricultural work, the controller (180) is configured to determine that the preparation work is not necessary.

## Patentansprüche

1. Steuerungssystem für eine landwirtschaftliche Maschine (100), wobei das Steuerungssystem aufweist:
eine Steuerung (180), die konfiguriert ist, autonomes Fahren der landwirtschaftlichen Maschine (100) zu steuern; und
eine Speichervorrichtung (170, 650), die konfiguriert ist, Kartendaten über eine Umgebung, in der sich die landwirtschaftliche Maschine (100) bewegt, und einen Zeitplan für landwirtschaftliche Arbeiten zu speichern, die von der landwirtschaftlichen Maschine (100) ausgeführt werden sollen,
wobei die landwirtschaftliche Maschine (100) einen oder mehrere Sensoren (230, 232) aufweist, die konfiguriert sind, einen Befestigungszustand eines Arbeitsgeräts (300), das an der landwirtschaftlichen Maschine (100) angebracht werden soll, eine Verschlechterung des Arbeitsgeräts (300), eine Verschlechterung eines Teils der landwirtschaftlichen Maschine (100) oder einen Mangel an Betriebsstoffen zu erfassen,
**dadurch gekennzeichnet, dass**
die Steuerung (180) konfiguriert ist, um:
die landwirtschaftliche Maschine (100) gemäß dem Zeitplan so zu steuern, dass die landwirtschaftliche Maschine (100) nacheinander mehrere Felder aufsucht, auf denen die landwirtschaftlichen Arbeiten für einen Tag geplant sind, und Aufgaben der landwirtschaftlichen Arbeiten, die im Zeitplan enthalten sind, in jedem der mehreren Felder ausführt;
nachdem alle Aufgaben der landwirtschaftlichen Arbeiten auf den mehreren Feldern abgeschlossen sind, die für den Tag geplant sind, jedes Mal, wenn eine Aufgabe der landwirtschaftlichen Arbeiten auf jedem der mehreren Felder beendet ist, oder bevor die landwirtschaftlichen Arbeiten auf den mehreren Feldern für den Tag begonnen werden, festzustellen, ob Vorbereitungsarbeiten, die mindestens eines des Austauschs des Arbeitsgeräts (300), der Wartung des Arbeitsgeräts (300), des Austauschs eines Teils der landwirtschaftlichen Maschine (100), der Wartung eines Teils der landwirtschaftlichen Maschine (100) oder der Auffüllung der Betriebsstoffe umfassen, erforderlich sind, um eine nächste Aufgabe der landwirtschaftlichen Arbeiten auszuführen; und
falls festgestellt wird, dass die Vorbereitungsarbeiten erforderlich sind, basierend auf den Kartendaten einen Zielpfad entlang einer Straße zu erzeugen, die sich zu einem Vorbereitungsort außerhalb der mehreren Felder erstreckt, an dem die Vorbereitungsarbeiten durchgeführt werden sollen, und die landwirtschaftliche Maschine (100) entlang des Zielpfads zum Vorbereitungsort zu bewegen, bevor die landwirtschaftlichen Arbeiten durchgeführt werden.

2. Steuerungssystem nach Anspruch 1, wobei der eine oder die mehreren Sensoren (230, 232) mindestens einen eines Bildsensors, der so angeordnet ist, dass er das Arbeitsgerät (300), den Teil der landwirtschaftlichen Maschine (100) oder die Betriebsstoffe abbildet, oder eines Sensors aufweist, um eine Restmenge der Betriebsstoffe zu messen.

3. Steuerungssystem nach Anspruch 1 oder 2, wobei im Fall einer Bewegung der landwirtschaftlichen Maschine (100) zum Vorbereitungsort, die Steuerung (180) konfiguriert ist, eine Benachrichtigung an einen Computer zu senden, der von einem Mitarbeiter genutzt wird, der die Vorbereitungsarbeiten durchführt.

4. Steuerungssystem nach einem der Ansprüche 1 bis 3, wobei, nachdem die Vorbereitungsarbeiten abgeschlossen sind, die Steuerung (180) konfiguriert ist, die landwirtschaftliche Maschine (100) zu einem zuvor festgelegten Aufbewahrungsort für die landwirtschaftliche Maschine (100) oder zu einem Feld zu bewegen, auf dem eine nächste Aufgabe landwirtschaftlicher Arbeiten durchgeführt werden soll.

5. Steuerungssystem nach einem der Ansprüche 1 bis 4, wobei die Steuerung (180) konfiguriert ist, festzustellen, ob die Vorbereitungsarbeiten für eine nächste Aufgabe landwirtschaftlicher Arbeiten erforderlich sind oder nicht, jedes Mal, wenn eine von der landwirtschaftlichen Maschine (100) ausgeführte Aufgabe der landwirtschaftlichen Arbeit beendet ist.

6. Steuerungssystem nach einem der Ansprüche 1 bis 5, wobei die Steuerung (180) konfiguriert ist, um:
festzustellen, ob die Vorbereitungsarbeiten erforderlich sind oder nicht, basierend auf dem Signal, das dem einen oder den mehreren Sensoren (230, 232) ausgegeben wird, nachdem die von der landwirtschaftlichen Maschine (100) durchgeführten landwirtschaftlichen Arbeiten für einen Tag beendet sind;
falls die Vorbereitungsarbeiten nicht erforderlich sind, die landwirtschaftliche Maschine (100) zu einem zuvor festgelegten Aufbewahrungsort für die landwirtschaftliche Maschine (100) zu bewegen; und
falls die Vorbereitungsarbeiten erforderlich sind, die landwirtschaftliche Maschinen (100) zum Vorbereitungsort zu bewegen und nachdem die Vorbereitungsarbeiten beendet sind, die landwirtschaftliche Maschine (100) zum Aufbewahrungsort zu bewegen.

7. Steuerungssystem nach einem der Ansprüche 1 bis 5, wobei die Steuerung (180) konfiguriert ist, um:
ein Signal, das die Durchführung der Vorbereitungsarbeiten anfordert, an einen Computer an einem Kandidaten-Vorbereitungsort für den Vorbereitungsort zu senden;
falls eine Antwort vom Computer empfangen wird, die angibt, dass es möglich ist, die Vorbereitungsarbeiten durchzuführen, den Kandidaten-Vorbereitungsort als Vorbereitungsort zu bestimmen; und
falls keine Antwort vom Computer empfangen wird, die angibt, dass es möglich ist, die Vorbereitungsarbeiten durchzuführen, die landwirtschaftliche Maschine (100) zu einem zuvor festgelegten Aufbewahrungsort für die landwirtschaftliche Maschine (100) zu bewegen, ohne den Vorbereitungsort zu bestimmen.

8. Steuerungssystem nach einem der Ansprüche 1 bis 5, wobei die Steuerung (180) konfiguriert ist, um:
ein Signal, das die Durchführung der Vorbereitungsarbeiten anfordert, an einen ersten Computer an einem ersten Kandidaten-Vorbereitungsort zu senden, der aus mehreren Kandidaten-Vorbereitungsorten ausgewählt wird;
falls eine Antwort vom ersten Computer empfangen wird, die angibt, dass es möglich ist, die Vorbereitungsarbeiten durchzuführen, den ersten Kandidaten-Vorbereitungsort als Vorbereitungsort zu bestimmen;
falls vom ersten Computer keine Antwort empfangen wird, die angibt, dass es möglich ist, die Vorbereitungsarbeiten durchzuführen, ein Signal, das die Durchführung der Vorbereitungsarbeiten anfordert, an einen zweiten Computer an einem zweiten Kandidaten-Vorbereitungsort zu senden, der aus den mehreren Kandidaten-Vorbereitungsorten ausgewählt wird; und
falls eine Antwort vom zweiten Computer empfangen wird, die angibt, dass es möglich ist, die Vorbereitungsarbeiten durchzuführen, den zweiten Kandidaten-Vorbereitungsort als Vorbereitungsort zu bestimmen.

9. Steuerungssystem nach einem der Ansprüche 1 bis 8, wobei beim Bewegen der landwirtschaftlichen Maschine (100) zum Vorbereitungsort die Steuerung (180) konfiguriert ist, eine Benachrichtigung, die Informationen enthält, die den Vorbereitungsort und den Inhalt der Vorbereitungsarbeiten angeben, an ein Endgerät zu senden, das von einem Benutzer der landwirtschaftlichen Maschine (100) verwendet wird.

10. Landwirtschaftliches Verwaltungssystem, das aufweist:
eine landwirtschaftliche Maschine (100), die eine Steuerung (180), die konfiguriert ist, autonomes Fahren zu steuern, und einem oder mehreren Sensoren (230, 232) aufweist, die konfiguriert sind, einen Befestigungszustand eines Arbeitsgeräts (300), das an der landwirtschaftlichen Maschine (100) angebracht werden soll, eine Verschlechterung des Arbeitsgeräts (300), eine Verschlechterung eines Teils der landwirtschaftlichen Maschine (100), oder einen Mangel an Betriebsstoffen zu erfassen;
einer Speichervorrichtung (170, 650), die konfiguriert ist, Kartendaten über eine Umgebung, in der sich die landwirtschaftliche Maschine (100) bewegt, und einen Zeitplan für landwirtschaftliche Arbeiten zu speichern, die von der landwirtschaftlichen Maschine (100) ausgeführt werden sollen; und
eine Verwaltungsvorrichtung, die konfiguriert ist, die landwirtschaftliche Maschine (100) zu verwalten,
**dadurch gekennzeichnet, dass**
die Steuerung (180) konfiguriert ist, um:
basierend auf einer Anweisung von der Verwaltungsvorrichtung die landwirtschaftliche Maschine (100) gemäß dem Zeitplan so zu steuern, dass die landwirtschaftliche Maschine (100) nacheinander mehrere Felder aufsucht, auf denen die landwirtschaftlichen Arbeiten für einen Tag geplant sind, und Aufgaben der landwirtschaftlichen Arbeiten, die im Zeitplan enthalten sind, in jedem der mehreren Felder ausführt;
nachdem alle Aufgaben der landwirtschaftlichen Arbeiten auf den mehreren Feldern abgeschlossen sind, die für den Tag geplant sind, jedes Mal, wenn eine Aufgabe der landwirtschaftlichen Arbeiten auf jedem der mehreren Felder beendet ist, oder bevor die landwirtschaftlichen Arbeiten auf den mehreren Feldern für den Tag begonnen werden, festzustellen, ob Vorbereitungsarbeiten, die mindestens eines des Austauschs des Arbeitsgeräts (300), der Wartung des Arbeitsgeräts (300), des Austauschs eines Teils der landwirtschaftlichen Maschine (100), der Wartung eines Teils der landwirtschaftlichen Maschine (100) oder der Auffüllung der Betriebsstoffe umfassen, erforderlich sind, um eine nächste Aufgabe der landwirtschaftlichen Arbeiten auszuführen; und
falls festgestellt wird, dass die Vorbereitungsarbeiten erforderlich sind, basierend auf den Kartendaten einen Zielpfad entlang einer Straße zu erzeugen, die sich zu einem Vorbereitungsort außerhalb der mehreren Felder erstreckt, an dem die Vorbereitungsarbeiten durchgeführt werden sollen, und die landwirtschaftliche Maschine (100) entlang des Zielpfads zum Vorbereitungsort zu bewegen, bevor die landwirtschaftlichen Arbeiten durchgeführt werden.

11. Landwirtschaftliches Verwaltungssystem nach Anspruch 10, wobei die Steuerung (180) konfiguriert ist, Informationen, die den Inhalt der landwirtschaftlichen Arbeiten angeben, von der Verwaltungsvorrichtung zu erfassen und basierend auf dem Inhalt der landwirtschaftlichen Arbeiten und einem Zustand der landwirtschaftlichen Maschine (100) zu bestimmen, ob die Vorbereitungsarbeiten erforderlich sind oder nicht.

12. Landwirtschaftliches Verwaltungssystem nach Anspruch 11, wobei in einem Fall, in dem irgendeines eins Befestigungszustands des Arbeitsgeräts (300), einer Art der Betriebsstoffe oder einer Menge der Betriebsstoffe nicht für den Inhalt der landwirtschaftlichen Arbeiten geeignet ist, die Steuerung (180) konfiguriert ist, festzustellen, dass die Vorbereitungsarbeiten erforderlich sind; und in einem Fall, in dem irgendeines eins Befestigungszustands des Arbeitsgeräts (300), einer Art der Betriebsstoffe oder einer Menge der Betriebsstoffe für den Inhalt der landwirtschaftlichen Arbeiten geeignet ist, die Steuerung (180) konfiguriert ist, festzustellen, dass die Vorbereitungsarbeiten nicht erforderlich sind.

## Revendications

1. Système de commande pour une machine agricole (100), ledit système de commande comprenant :
un contrôleur (180) configuré pour commander une conduite autonome de la machine agricole (100) ; et
un dispositif de mémorisation (170, 650) configuré pour stocker des données cartographiques relatives à l'environnement où la machine agricole (100) se déplace, ainsi qu'un programme des travaux agricoles devant être effectués par la machine agricole (100),
où la machine agricole (100) comprend un ou plusieurs capteurs (230, 232) configurés pour détecter l'état de fixation d'un outil (300) devant être attelé à la machine agricole (100), une détérioration de l'outil (300), une détérioration d'une pièce de la machine agricole (100) ou une carence de consommables,
**caractérisé en ce que**
le contrôleur (180) est configuré pour :
commander la machine agricole (100) conformément au programme de sorte que la machine agricole (100) se rende successivement dans une pluralité de champs où des travaux agricoles sont programmés pour une journée et effectue les tâches des travaux agricoles comprises dans le programme dans chacun des champs de la pluralité ;
à l'issue de toutes les tâches des travaux agricoles dans la pluralité de champs programmées pour la journée, chaque fois qu'une tâche des travaux agricoles dans chacun des champs de la pluralité est achevée, ou avant le début des travaux agricoles dans la pluralité de champs pendant la journée, déterminer si une intervention préalable, incluant au moins l'une des actions suivantes : remplacement de l'outil (300), entretien de l'outil (300), remplacement d'une pièce de la machine agricole (100), l'entretien d'une pièce de la machine agricole (100) ou réapprovisionnement en consommables, est exigée pour effectuer une tâche suivante des travaux agricoles ; et,
s'il est déterminé que l'intervention préalable est exigée, générer un itinéraire cible, sur la base des données cartographiques, le long d'une route menant à un site de préparation en dehors de la pluralité de champs où l'intervention préalable doit être effectuée, et déplacer la machine agricole (100) le long de l'itinéraire cible jusqu'au site de préparation, avant que les travaux agricoles ne soient effectués.

2. Système de commande selon la revendication 1, où le ou les capteurs (230, 232) comprennent un capteur d'image disposé de manière à capturer une image de l'outil (300), de la pièce de la machine agricole (100) ou des consommables, et/ou un capteur destiné à mesurer la quantité de consommables restante.

3. Système de commande selon la revendication 1 ou la revendication 2, où, dans le cas d'un déplacement de la machine agricole (100) vers le site de préparation, le contrôleur (180) est configuré pour transmettre une notification à un ordinateur utilisé par un opérateur exécutant l'intervention préalable.

4. Système de commande selon l'une des revendications 1 à 3, où, à l'issue de l'intervention préalable, le contrôleur (180) est configuré pour déplacer la machine agricole (100) vers un dépôt prédéfini pour la machine agricole (100) ou vers un champ où l'exécution d'une tâche de travaux agricoles suivante est programmée.

5. Système de commande selon l'une des revendications 1 à 4, où le contrôleur (180) est configuré pour déterminer si l'intervention préalable est exigée ou non pour une tâche de travaux agricoles suivante, chaque fois qu'une tâche de travaux agricoles effectuée par la machine agricole (100) est terminée.

6. Système de commande selon l'une des revendications 1 à 5, où le contrôleur (180) est configuré pour :
déterminer si l'intervention préalable est exigée ou non sur la base du signal émis par le ou les capteurs (230, 232) à l'issue des travaux agricoles effectués par la machine agricole (100) pendant la journée ;
si l'intervention préalable n'est pas exigée, déplacer la machine agricole (100) vers un dépôt prédéfini pour la machine agricole (100) ; et,
si l'intervention préalable est exigée, déplacer la machine agricole (100) vers le site de préparation, puis, à l'issue de l'intervention préalable, déplacer la machine agricole (100) vers le dépôt.

7. Système de commande selon l'une des revendications 1 à 5, où le contrôleur (180) est configuré pour :
transmettre un signal demandant l'exécution de l'intervention préalable à un ordinateur sur un site de préparation candidat pour le site de préparation ;
si une réponse est reçue de l'ordinateur, indiquant qu'il est possible d'effectuer l'intervention préalable, désigner le site de préparation candidat en tant que site de préparation ; et
si aucune réponse indiquant qu'il est possible d'effectuer l'intervention préalable n'est reçue de l'ordinateur, déplacer la machine agricole (100) vers un dépôt prédéfini pour la machine agricole (100) sans déterminer le site de préparation.

8. Système de commande selon l'une des revendications 1 à 5, où le contrôleur (180) est configuré pour :
transmettre un signal demandant l'exécution de l'intervention préalable à un premier ordinateur sur un premier site de préparation candidat sélectionné parmi une pluralité de sites de préparation candidats ;
si une réponse est reçue du premier ordinateur, indiquant qu'il est possible d'effectuer l'intervention préalable, déterminer le premier site de préparation candidat en tant que site de préparation ;
si aucune réponse indiquant qu'il est possible d'effectuer l'intervention préalable n'est reçue du premier ordinateur, transmettre un signal demandant l'exécution de l'intervention préalable à un deuxième ordinateur sur un deuxième site de préparation candidat sélectionné parmi la pluralité de sites de préparation candidats ; et,
si une réponse indiquant qu'il est possible d'effectuer l'intervention préalable est reçue du deuxième ordinateur, désigner le deuxième site de préparation candidat en tant que site de préparation.

9. Système de commande selon l'une des revendications 1 à 8, où, lors du déplacement de la machine agricole (100) vers le site de préparation, le contrôleur (180) est configuré pour transmettre une notification comprenant des informations indiquant le site de préparation et le contenu de l'intervention préalable à un terminal utilisé par un utilisateur de la machine agricole (100).

10. Système de gestion agricole, comprenant :
une machine agricole (100) comprenant un contrôleur (180) configuré pour commander une conduite autonome et un ou plusieurs capteurs (230, 232) configurés pour détecter l'état de fixation d'un outil (300) devant être attelé à la machine agricole (100), une détérioration de l'outil (300), une détérioration d'une pièce de la machine agricole (100) ou une carence de consommables ;
un dispositif de mémorisation (170, 650) configuré pour stocker des données cartographiques à l'environnement où la machine agricole (100) se déplace, ainsi qu'un programme des travaux agricoles devant être effectués par la machine agricole (100) ; et
un dispositif de gestion configuré pour gérer la machine agricole (100),
**caractérisé en ce que**
le contrôleur (180) est configuré pour :
sur la base d'une instruction du dispositif de gestion, commander la machine agricole (100) conformément au programme de sorte que la machine agricole (100) se rende successivement dans une pluralité de champs où des travaux agricoles sont programmés pour une journée et effectue les tâches des travaux agricoles comprises dans le programme dans chacun des champs de la pluralité ;
à l'issue de toutes les tâches des travaux agricoles dans la pluralité de champs programmées pour la journée, chaque fois qu'une tâche des travaux agricoles dans chacun des champs de la pluralité est achevée, ou avant le début des travaux agricoles dans la pluralité de champs pendant la journée, déterminer si une intervention préalable, incluant au moins l'une des actions suivantes : remplacement de l'outil (300), entretien de l'outil (300), remplacement d'une pièce de la machine agricole (100), l'entretien d'une pièce de la machine agricole (100) ou réapprovisionnement en consommables, est exigée pour effectuer une tâche suivante des travaux agricoles ; et,
s'il est déterminé que l'intervention préalable est exigée, générer un itinéraire cible, sur la base des données cartographiques, le long d'une route menant à un site de préparation en dehors de la pluralité de champs où l'intervention préalable doit être effectuée, et déplacer la machine agricole (100) le long de l'itinéraire cible jusqu'au site de préparation, avant que les travaux agricoles ne soient effectués.

11. Système de gestion agricole selon la revendication 10, où le contrôleur (180) est configuré pour acquérir des informations indiquant le contenu des travaux agricoles en provenance du dispositif de gestion, et pour déterminer si l'intervention préalable est exigée ou non sur la base du contenu des travaux agricoles et de l'état de la machine agricole (100).

12. Système de gestion agricole selon la revendication 11, où, si l'état de fixation de l'outil (300), le type de consommables ou la quantité de consommables ne conviennent pas au contenu des travaux agricoles indiqué par les informations acquises du dispositif de gestion, le contrôleur (180) est configuré pour déterminer que l'intervention préalable est exigée ; et, si l'état de fixation de l'outil (300), le type de consommables ou la quantité de consommables conviennent au contenu des travaux agricoles, le contrôleur (180) est configuré pour déterminer que l'intervention préalable n'est pas exigée.
